(19) Europäisches Patentamt
European Patent Office
Office européen des brevets

(11) **EP 4 697 814 A1**

(12) **EUROPEAN PATENT APPLICATION**
published in accordance with Art. 153(4) EPC

(43) Date of publication:
**18.02.2026  Bulletin 2026/08**

(21) Application number: **24802731.0**

(22) Date of filing: **18.04.2024**

(51) International Patent Classification (IPC):
***H04W 52/02*** (2009.01)

(52) Cooperative Patent Classification (CPC):
**H04W 52/02**

(86) International application number:
**PCT/CN2024/088597**

(87) International publication number:
**WO 2024/230446 (14.11.2024 Gazette 2024/46)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.05.2023  CN 202310517343**

(71) Applicant: **Huawei Technologies Co., Ltd.
Shenzhen, Guangdong 518129 (CN)**

(72) Inventor: **LI, Chenwan
Shenzhen, Guangdong 518129 (CN)**

(74) Representative: **Gill Jennings & Every LLP
The Broadgate Tower
20 Primrose Street
London EC2A 2ES (GB)**

(54) **DATA TRANSMISSION METHOD AND APPARATUS, TERMINAL, NETWORK DEVICE, AND STORAGE MEDIUM**

(57)    This application discloses a data transmission method and apparatus, a terminal, a network device, and a storage medium, and pertains to the field of communication technologies. In this application, a network device may send a first signal to a terminal, to indicate a plurality of sending windows. Based on this, the terminal may send uplink data to the network device based on the sending window indicated by the first signal. Correspondingly, the network device only needs to monitor, in the sending window indicated by the first signal, the uplink data sent by the terminal, and does not need to perform real-time monitoring, to reduce power consumption of the network device.

```
First                                              Network
terminal                                           device

        401: Send a first signal, where the first signal
◄─────────── indicates a plurality of sending windows

        402: Send uplink data based on the sending window
──────────────── indicated by the first signal ──────────►
```

FIG. 4

## Description

This application claims priority to Chinese Patent Application No. 202310517343.4, filed with the China National Intellectual Property Administration on May 8, 2023 and entitled "DATA TRANSMISSION METHOD AND APPARATUS, TERMINAL, NETWORK DEVICE, AND STORAGE MEDIUM", which is incorporated herein by reference in its entirety.

## TECHNICAL FIELD

This application relates to the field of communication technologies, and in particular, to a data transmission method and apparatus, a terminal, a network device, and a storage medium.

## BACKGROUND

With development of a 5th generation (5th generation, 5G) internet of things (internet of things, IoT), a requirement for a terminal with low power consumption is increasing in a 5G network. Based on this, currently, a terminal with low power consumption that does not have a high-precision crystal oscillator is widely used. For this type of terminal, when communicating with a network device, the terminal may send data to the network device at any time. In this case, the network device needs to monitor the terminal in real time, which causes high power consumption of the network device.

## SUMMARY

This application provides a data transmission method and apparatus, a terminal, a network device, and a storage medium, to implement discontinuous monitoring of the network device, so as to reduce power consumption of the network device.

To achieve the foregoing objectives, this application uses the following technical solutions.

According to a first aspect, a data transmission method is provided. The method includes: receiving a first signal, where the first signal indicates a plurality of sending windows; and sending uplink data based on the sending window.

The plurality of sending windows may be periodic sending windows, or may be aperiodic sending windows.

In this application, a network device may send the first signal to the terminal, to indicate the plurality of sending windows. Based on this, the terminal may send the uplink data to the network device based on the sending window indicated by the first signal. In this way, the network device only needs to monitor, in the sending window indicated by the first signal, the uplink data sent by the terminal, and does not need to perform real-time monitoring, to reduce power consumption of the network device.

Optionally, the first signal may further indicate a plurality of receiving windows. The plurality of receiving windows may be periodic receiving windows, or may be aperiodic receiving windows.

Optionally, the method further includes: determining a repetition periodicity of the sending window based on the first signal; or determining, based on the first signal, a time position of the sending window relative to the first signal.

Optionally, the first signal carries a window configuration parameter, and the window configuration parameter includes the repetition periodicity of the sending window.

Optionally, the first signal is a periodically sent signal, the first signal carries a window configuration parameter, and the window configuration parameter includes a signal periodicity of the first signal and a quantity of sending windows in the signal periodicity; and an implementation process determining, based on the first signal, the time position of the sending window relative to the first signal includes: determining the time position of the sending window relative to the first signal based on the signal periodicity of the first signal and the quantity of sending windows in the signal periodicity.

In this application, the network device may carry the window configuration parameter in the first signal based on at least one of a service requirement, an energy saving requirement, and a network scheduling requirement, to configure the sending window. For example, in a serviceintensive scenario, a large quantity of sending windows may be configured by using the window configuration parameter, to meet a service requirement. In a low power consumption scenario, a small quantity of sending windows may be configured by using the window configuration parameter, to meet lower-power consumption, and the like.

Optionally, the method further includes: receiving first data in a first receiving window. Based on this, an implementation process of sending the uplink data based on the sending window includes: sending feedback data of the first data in an $n^{th}$ sending window after the first receiving window, where n is an integer greater than 0.

The first data is downlink data.

In this application, the terminal may monitor and receive downlink data in a receiving window, and send feedback data of the downlink data in a subsequent sending window. In this way, both the terminal and the network device can receive data through monitoring in corresponding windows, and do not need to perform real-time monitoring, to reduce power consumption of the terminal and the network device.

Optionally, the method further includes: if there is second data to be sent, sending the second data in the $n^{th}$ sending window after the first receiving window.

The second data is uplink data.

In this application, after receiving the downlink data in the first receiving window, if there is still uplink data to be sent, the terminal may simultaneously send the feedback data of the downlink data and the uplink data in a sending window after the first receiving window. In this way, both the feedback data of the downlink data and the uplink data can be sent in a timely manner.

Optionally, the method further includes: if there is second data to be sent, sending the second data in a $k^{th}$ sending window after the first receiving window, where k is not equal to n.

In this application, after the terminal receives the downlink data in the first receiving window, if there is still uplink data to be sent, the terminal may send the feedback data of the downlink data and the uplink data respectively in two sending windows after the first receiving window. For example, the feedback data of the downlink data may be first sent in a sending window, and then the uplink data is sent in a next sending window.

Optionally, the method further includes: receiving feedback data of the second data in an $m^{th}$ receiving window after the $k^{th}$ sending window after the first receiving window.

In this application, after sending the uplink data, the terminal may further monitor and receive the feedback data of the second data in the $m^{th}$ receiving window after the sending window for sending the uplink data.

Optionally, the method further includes: if sending duration of the second data is greater than window duration of the $k^{th}$ sending window after the first receiving window, sending a window duration adjustment request in the $n^{th}$ sending window after the first receiving window, where the window duration adjustment request is used to request to adjust the window duration of the $k^{th}$ sending window after the first receiving window, and k is greater than n. Based on this, an implementation process of sending the second data in the $k^{th}$ sending window after the first receiving window includes: sending, based on adjusted window duration, the second data in the $k^{th}$ sending window after the first receiving window.

In this application, a data volume of uplink data to be sent may be large. Consequently, duration required for sending the uplink data is greater than window duration of a sending window. In this case, the terminal may adjust, by sending the window duration adjustment request to the network device, window duration of a sending window used to send the uplink data, to ensure that the uplink data can be completely sent.

Optionally, after sending the window duration adjustment request, the terminal may further receive, before the $k^{th}$ sending window after the first receiving window, third information sent by the network device, where the third information is used to respond to the window duration adjustment request.

Optionally, the implementation process of sending the uplink data based on the sending window may include: if third data to be sent to another terminal is detected in the first receiving window, and there is the second data to be sent, sending the second data in the $m^{th}$ sending window after the first receiving window, where m is an integer greater than 1.

The third data is downlink data. The third data that is sent to the another terminal and that is detected by the current terminal in the first receiving window may mean that the third data that is obtained through monitoring by the current terminal in the first receiving window is not data sent to the current terminal. For example, if the current terminal detects that terminal information included in the third data obtained through monitoring in the first receiving window is not terminal information of the current terminal, the current terminal may determine that the third data is not data sent to the current terminal, but data sent to another terminal.

In this application, when the terminal obtains, through monitoring in a receiving window, downlink data that is not sent to the terminal, if there is still uplink data to be sent in the terminal, the terminal may first wait for another terminal to feed back feedback data of the downlink data in a specific sending window, and then send, in a sending window after the sending window, the uplink data to be sent of the terminal, to reduce a probability of a conflict with the sending window used by the another terminal.

Optionally, the implementation process of sending the uplink data based on the sending window may include: if third data sent by the network device to another terminal is detected in the first receiving window, and there is the second data to be sent, sending the second data to the network device in a second time period after a first time period in the $n^{th}$ sending window after the first receiving window.

In this application, when the terminal obtains, through monitoring in a receiving window, downlink data that is not sent to the terminal, if there is still uplink data to be sent in the terminal, the terminal may first wait for another terminal to feed back feedback data of the downlink data in a specific sending window, and then send, by using a remaining time period of the sending window, the uplink data to be sent of the terminal. In this way, a probability of two terminals sending data by using a same time period can also be reduced.

Optionally, the method further includes: receiving the first data in the first receiving window. Based on this, the implementation process of sending the uplink data based on the sending window may include: if the first data fails to be decoded, sending first information in the $n^{th}$ sending window after the first receiving window, where the first information indicates that the first data fails to be decoded.

In this application, if downlink data received by the terminal in a specific receiving window fails to be decoded, the terminal may send the first information in a sending window after the receiving window, to notify the network device that the downlink data fails to be decoded, to indicate the network device to perform data retransmission. This improves reliability of data transmission.

Optionally, the method further includes: receiving retransmission of the first data in a $p^{th}$ receiving window after the $n^{th}$ sending window after the first receiving window.

Optionally, the method further includes: receiving a first scheduling instruction, where the first scheduling instruction indicates a receiving window for receiving the retransmission of the first data.

The terminal may receive the first scheduling instruction in a third receiving window. The third receiving window may be a receiving window newly triggered by the network device, or may be a receiving window indicated by the first signal.

In addition, the receiving window, indicated by the first scheduling instruction, for receiving the retransmission of the first data may be a receiving window newly triggered by the network device. In this way, retransmission time of the first data can be more flexibly controlled. Alternatively, the receiving window for receiving the retransmission of the first data may be a receiving window indicated by the first signal.

Optionally, the method further includes: receiving second information in the first receiving window, where the second information indicates that fourth data fails to be decoded, and the fourth data is uplink data. Based on this, the implementation process of sending the uplink data based on the sending window may include: sending retransmission of the fourth data in the $n^{th}$ sending window after the first receiving window.

In this application, if uplink data received by the network device in a sending window before the first receiving window fails to be decoded, the network device may send the second information in the first receiving window to notify the terminal that the uplink data fails to be decoded, to indicate the terminal to send retransmission of the uplink data. Correspondingly, after receiving the second information, the terminal may send the retransmission of the uplink data in the $n^{th}$ sending window after the first receiving window.

Optionally, the method further includes: receiving a second scheduling instruction in the first receiving window, where the second scheduling instruction indicates a sending window for sending the retransmission of the fourth data, and the sending window for sending the retransmission of the fourth data is one of the plurality of sending windows, or the sending window for sending the retransmission of the fourth data is a time window other than the plurality of sending windows.

In this application, if uplink data received by the network device in a sending window before the first receiving window fails to be decoded, the network device may send, in the first receiving window, the second scheduling instruction to indicate a sending window for sending retransmission of the uplink data, so that the terminal sends the retransmission of the uplink data in the window for sending the retransmission of the uplink data.

The window for sending the retransmission of the uplink data may be a sending window indicated by the first signal. Alternatively, the window for sending the retransmission of the uplink data may be a time window other than the sending window indicated by the first signal, for example, may be a sending window newly triggered by the network device. In this way, the retransmission of the uplink data can be sent more flexibly.

Optionally, the implementation process of sending the uplink data based on the sending window may include: sending a window update request in a first sending window, where the window update request includes a target parameter, and the window update request is used to request to update the window configuration parameter based on the target parameter.

Optionally, the method further includes: receiving fourth information, where the fourth information is used to respond to the window update request.

In this application, when determining that a current window cannot meet a data transmission requirement, the terminal may request the network device to update the window configuration parameter, so that an updated window can better match a service requirement and an energy saving requirement.

Optionally, the method further includes: receiving a window update indication in a second receiving window, where the window update indication includes the target parameter, and the window update indication indicates to update the window configuration parameter based on the target parameter.

In this application, when determining that a current window cannot meet a data transmission requirement, the network device may indicate the terminal to update the window configuration parameter, so that an updated window can better match a service requirement, a network scheduling requirement, and an energy saving requirement.

Optionally, the target parameter may be a terminal-level update parameter or a common update parameter. The terminal-level update parameter is an update parameter for a specific terminal, and the common update parameter is an update parameter for a terminal within coverage of one or more cells provided by the network device.

Optionally, in the terminal, an effective moment of the target parameter is a sending moment of the window update request, a receiving moment of the fourth information, or a receiving moment of the window update indication; or when the target parameter is an update parameter for a plurality of terminals, for example, when the target parameter is a common update parameter, the effective moment of the target parameter is a start moment of a signal periodicity of a next first signal.

According to a second aspect, a data transmission method is provided. The method includes: sending a first signal, where the first signal indicates a plurality of sending windows; and receiving uplink data based on the sending window.

Optionally, the first signal further indicates a plurality of receiving windows. The plurality of sending windows are periodic sending windows, or may be aperiodic sending windows. The plurality of receiving windows may be periodic receiving windows, or may be aperiodic receiving windows.

Optionally, the method further includes: indicating a repetition periodicity of the sending window by using the first signal; or indicating, by using the first signal, a time position of the sending window relative to the first signal.

Optionally, the first signal carries a window configuration parameter, and the window configuration parameter includes the repetition periodicity of the sending window.

Optionally, the first signal is a periodically sent signal, the first signal carries a window configuration parameter, and the window configuration parameter includes a signal periodicity of the first signal and a quantity of sending windows in the signal periodicity. Based on this, an implementation process of indicating, by using the first signal, the time position of the sending window relative to the first signal includes: indicating the time position of the sending window relative to the first signal by using the signal periodicity of the first signal and the quantity of sending window in the signal periodicity.

Optionally, the method further includes: sending first data in a first receiving window. Based on this, an implementation process of receiving the uplink data based on the sending window may include: receiving feedback data of the first data in an $n^{th}$ sending window after the first receiving window, where n is an integer greater than 0.

Optionally, the method further includes: receiving second data in the $n^{th}$ sending window after the first receiving window.

Optionally, the method further includes: receiving second data in a $k^{th}$ sending window after the first receiving window, where k is not equal to n.

Optionally, the method further includes: sending feedback data of the second data in an $m^{th}$ receiving window after the $k^{th}$ sending window after the first receiving window.

Optionally, the method further includes: receiving a window duration adjustment request in the $n^{th}$ sending window after the first receiving window, where the window duration adjustment request is used to request to adjust window duration of the $k^{th}$ sending window after the first receiving window, and k is greater than n. Based on this, an implementation process of receiving the second data in the $k^{th}$ sending window after the first receiving window includes: receiving, based on adjusted window duration, the second data in the $k^{th}$ sending window after the first receiving window.

Optionally, the method further includes: sending third information in a receiving window after the $n^{th}$ sending window after the first receiving window, where the third information is used to respond to the window duration adjustment request.

Optionally, the method further includes: sending the first data in the first receiving window. Based on this, the implementation process of receiving the uplink data based on the sending window may include: receiving first information in the $n^{th}$ sending window after the first receiving window, where the first information indicates that the first data fails to be decoded.

Optionally, the method further includes: sending retransmission of the first data in a $p^{th}$ receiving window after the $n^{th}$ sending window after the first receiving window.

Optionally, the method further includes: sending a first scheduling instruction, where the first scheduling instruction indicates a receiving window for receiving the retransmission of the first data.

Optionally, sending the first scheduling instruction may be sending the first scheduling instruction in a third receiving window. The third receiving window is a receiving window indicated by the first signal, or the third receiving window is a time window other than the receiving window indicated by the first signal, for example, may be a newly triggered receiving window.

Optionally, the receiving window that is indicated by the first scheduling instruction and that is for receiving the retransmission of the first data may be a receiving window indicated by the first signal, or may be a time window other than the receiving window indicated by the first signal, for example, may be a newly triggered receiving window after the third receiving window.

Optionally, the method further includes: if fourth data fails to be decoded, sending second information in the first receiving window, where the second information indicates that the fourth data fails to be decoded, and the fourth data is uplink data. Based on this, the implementation process of receiving the uplink data based on the sending window may include: receiving retransmission of the fourth data in the $n^{th}$ sending window after the first receiving window.

Optionally, the method further includes: if the fourth data fails to be decoded, sending a second scheduling instruction in the first receiving window, where the second scheduling instruction indicates a sending window for sending the retransmission of the fourth data, and the sending window for sending the retransmission of the fourth data is one of the plurality of sending windows, or the sending window for sending the retransmission of the fourth data is a time window other than the plurality of sending windows, for example, may be a newly triggered sending window.

Optionally, the implementation process of receiving the uplink data based on the sending window may include: receiving a window update request in a first sending window, where the window update request includes a target parameter, and the window update request is used to request to update the window configuration parameter based on the target parameter.

Optionally, the method further includes: sending fourth information, where the fourth information is used to respond to the window update request.

Optionally, the method further includes: sending a window update indication in a second receiving window, where the window update indication includes the target parameter, and the window update indication indicates to update the window configuration parameter based on the target parameter.

Optionally, the target parameter may be a terminal-level update parameter or a common update parameter. The terminal-level update parameter is an update parameter for a specific terminal, and the common update parameter is an update parameter for a terminal within coverage of one or more cells provided by a network device.

Optionally, in the network device, an effective moment of the target parameter is a receiving moment of the window update request, a sending moment of the fourth information, or a sending moment of the window update indication; or when the target parameter is an update parameter for a plurality of terminals, for example, when the target parameter is a common update parameter, the effective moment of the target parameter is a start moment of a signal periodicity of a next first signal.

According to a third aspect, a data transmission apparatus is provided. The data apparatus may be deployed in a terminal, and the data transmission apparatus includes at least one module. For example, the at least one module includes a receiving module and a sending module.

The receiving module is configured to receive a first signal, where the first signal indicates a plurality of sending windows. The sending module is configured to send uplink data based on the sending window.

Optionally, the apparatus further includes a processing module, and the processing module is configured to: determine a repetition periodicity of the sending window based on the first signal; or determine, based on the first signal, a time position of the sending window relative to the first signal.

Optionally, the first signal carries a window configuration parameter, and the window configuration parameter includes the repetition periodicity of the sending window.

Optionally, the first signal is a periodically sent signal, the first signal carries a window configuration parameter, and the window configuration parameter includes a signal periodicity of the first signal and a quantity of sending windows in the signal periodicity. The processing module is specifically configured to: determine the time position of the sending window relative to the first signal based on the signal periodicity of the first signal and the quantity of sending windows in the signal periodicity.

Optionally, the receiving module is further configured to: receive first data in a first receiving window. The sending module is specifically configured to: send feedback data of the first data in an $n^{th}$ sending window after the first receiving window, where n is an integer greater than 0.

Optionally, the sending module is specifically configured to: if there is second data to be sent, send the second data in the $n^{th}$ sending window after the first receiving window.

Optionally, the sending module is specifically configured to: if there is second data to be sent, send the second data in a $k^{th}$ sending window after the first receiving window, where k is not equal to n.

Optionally, the receiving module is further configured to: receive feedback data of the second data in an $m^{th}$ receiving window after the $k^{th}$ sending window after the first receiving window.

Optionally, the sending module is further configured to: if sending duration of the second data is greater than window duration of the $k^{th}$ sending window after the first receiving window, send a window duration adjustment request in the $n^{th}$ sending window after the first receiving window, where the window duration adjustment request is used to request to adjust the window duration of the $k^{th}$ sending window after the first receiving window, and k is greater than n; and send, based on adjusted window duration, the second data in the $k^{th}$ sending window after the first receiving window.

According to a fourth aspect, a data transmission apparatus is provided. The data transmission apparatus is deployed in a network device, and the data transmission apparatus includes at least one module. For example, the at least one module includes a sending module and a receiving module.

The sending module is configured to send a first signal, where the first signal indicates a plurality of sending windows. The receiving module is configured to receive uplink data based on the sending window.

Optionally, the apparatus further includes a processing module, and the processing module is configured to: determine a repetition periodicity of the sending window based on the first signal; or indicate, by using the first signal, a time position of the sending window relative to the first signal.

Optionally, the first signal carries a window configuration parameter, and the window configuration parameter includes the repetition periodicity of the sending window.

Optionally, the first signal is a periodically sent signal, the first signal carries a window configuration parameter, and the window configuration parameter includes a signal periodicity of the first signal and a quantity of sending windows in the signal periodicity. The processing module is specifically configured to: determine the time position of the sending window relative to the first signal by using the signal periodicity of the first signal and the quantity of sending windows in the signal periodicity.

Optionally, the sending module is further configured to: sending first data in a first receiving window. The receiving module is specifically configured to: receive feedback data of the first data in an $n^{th}$ sending window after the first receiving window, where n is an integer greater than 0.

Optionally, the receiving module is specifically configured to: receive second data in the $n^{th}$ sending window after the first receiving window.

Optionally, the receiving module is specifically configured to: receive second data in a $k^{th}$ sending window after the first receiving window, where k is not equal to n.

Optionally, the sending module is further configured to: send feedback data of the second data in an $m^{th}$ receiving window after the $k^{th}$ sending window after the first receiving window.

Optionally, the receiving module is further configured to: receive a window duration adjustment request in the $n^{th}$ sending window after the first receiving window, where the window duration adjustment request is used to request to adjust window duration of the $k^{th}$ sending window after the first receiving window, and k is greater than n; and receive, based on adjusted window duration, the second data in the $k^{th}$ sending window after the first receiving window.

According to a fifth aspect, a terminal is provided. The terminal includes a processor, and the processor is configured to execute at least one program instruction or code stored in a memory, to implement the data transmission method according to the first aspect.

According to a sixth aspect, a network device is provided. The network device includes a processor, and the processor is configured to execute at least one program instruction or code stored in a memory, to implement the data transmission method according to the second aspect.

According to a seventh aspect, a computer-readable storage medium is provided. The computer-readable storage medium stores instructions, and when the instructions are run on a computer device, the computer device is enabled to perform the data transmission method according to the first aspect or the second aspect.

According to an eighth aspect, a computer program product including instructions is provided. When the computer program product runs on a computer, the computer is enabled to perform the data transmission method according to the first aspect or the second aspect.

Technical effects achieved in the second aspect to the eighth aspect are similar to technical effects achieved by corresponding technical means in the first aspect. Details are not described herein again.

In embodiments of this application, a network device may send a first signal to a terminal, to indicate a plurality of sending windows. Based on this, the terminal may send uplink data to the network device based on the sending window indicated by the first signal. Correspondingly, the network device only needs to monitor, in the sending window indicated by the first signal, the uplink data sent by the terminal, and does not need to perform real-time monitoring, to reduce power consumption of the network device.

**BRIEF DESCRIPTION OF DRAWINGS**

FIG. 1 is a diagram of a system architecture related to a data transmission method according to an embodiment of this application;

FIG. 2 is a diagram of a structure of a terminal according to an embodiment of this application;

FIG. 3 is a diagram of a structure of a network device according to an embodiment of this application;

FIG. 4 is a flowchart of a data transmission method according to an embodiment of this application;

FIG. 5 is a diagram of a sending window and a receiving window according to an embodiment of this application;

FIG. 6 is a diagram of a window combination according to an embodiment of this application;

FIG. 7 is a diagram of another window combination according to an embodiment of this application;

FIG. 8 is a diagram of another sending window and another receiving window according to an embodiment of this application;

FIG. 9 is a diagram of still another window combination according to an embodiment of this application;

FIG. 10 is a diagram in which a first terminal sends uplink data after obtaining, through monitoring in a receiving window, downlink data that is not sent to the first terminal according to an embodiment of this application;

FIG. 11 is a diagram of retransmitting downlink data based on a window combination according to an embodiment of this application;

FIG. 12 is a diagram of retransmitting downlink data based on a scheduling instruction according to an embodiment of this application;

FIG. 13 is another diagram of retransmitting downlink data based on a scheduling instruction according to an embodiment of this application;

FIG. 14 is a diagram of retransmitting uplink data based on a window combination according to an embodiment of this application;

FIG. 15 is a diagram of retransmitting uplink data based on a scheduling instruction according to an embodiment of this application;

FIG. 16 is another diagram of retransmitting uplink data based on a scheduling instruction according to an embodiment of this application;

FIG. 17 is a diagram of a structure of a data transmission apparatus according to an embodiment of this application; and

FIG. 18 is a diagram of a structure of another data transmission apparatus according to an embodiment of this application.

**DESCRIPTION OF EMBODIMENTS**

To make objectives, technical solutions, and advantages of embodiments of this application clearer, the following further describes implementations of this application in detail with reference to the accompanying drawings.

Before embodiments of this application are described in detail, an application scenario in embodiments of this application is first described.

As 5G new radio (new radio, NR) communication, machine-type communication (machine-type communication, MTC), and internet of things (internet of things, IoT) communication are increasingly widely used, a quantity of connections of IoT devices is increasing day by day. Therefore, demands for reducing costs and power consumptions of the IoT devices are increasingly strong. Based on this, currently, the industry is committed to a design of a simpler terminal with lower power consumption. For example, a high-precision crystal oscillator in the terminal is removed. In this way, power consumption of the terminal can be reduced. Because the terminal cannot implement high-precision clock synchronization with a network device after the terminal does not have a high-precision crystal oscillator, currently, this type of terminal may transmit data in an asynchronous transmission manner when communicating with the network device. In other words, when data is transmitted between the terminal and the network device, clock synchronization precision at a bit level or a symbol level does not need to be achieved. A data transmission method provided in embodiments of this application may be applied to a process in which data is transmitted between the terminal without a high-precision crystal oscillator and the network device in an asynchronous transmission manner, to reduce power consumption of the terminal and the network device. Certainly, for a terminal having a high-precision crystal oscillator or another type of terminal, the method provided in embodiments of this application may also be used to implement data transmission between the terminal and the network device, to reduce power consumption of the terminal and the network device.

The following describes a system architecture related to a data transmission method provided in embodiments of this application.

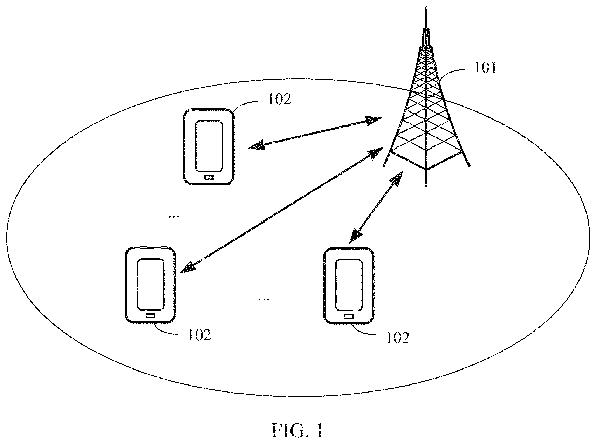

The data transmission method provided in embodiments of this application may be applied to a wireless communication system. FIG. 1 is a diagram of an architecture of a wireless communication system related to a data transmission method according to an embodiment of this application. As shown in FIG. 1, the wireless communication system includes a network device 101 and a terminal 102. A wireless communication connection is established between the network device 101 and the terminal 102.

In this embodiment of this application, the network device 101 may send a first signal to the terminal 102. The first signal indicates at least one window combination, and each window combination includes at least one receiving window and at least one sending window. After receiving the first signal, the terminal 102 may transmit data in the receiving window and the sending window that are included in the at least one window combination indicated by the first signal. In this way, the terminal 102 may monitor the network device in the receiving window to receive data, and the network device 101 may monitor the terminal 102 in the sending window to receive data, without real-time monitoring, to reduce power consumption of the terminal and the network device.

It should be noted that the wireless communication system may be a 5G NR communication system, a long term evolution (long term evolution, LTE) network, an enhanced long term evolution (enhanced long term evolution, eLTE) network, a universal mobile telecommunications system (universal mobile telecommunications system, UMTS), a code division multiple access (code division multiple access, CDMA) system, a wireless local area network (wireless local area network, WLAN), or the like, or may be a 6th generation (6th generation, 6G) communication system, another future-oriented communication system, or the like. In addition, the communication system provided in this application may be used in a terrestrial network (terrestrial network, TN) and/or a non-terrestrial network (non-terrestrial network, NTN). This is not limited.

The network device 101 may be a base station (base station, BS) in the wireless communication system. The base station may be in a plurality of forms, for example, a macro base station, a micro base station, a relay station, and an access point. For example, when the wireless communication system is a 5G NR communication system, the network device 101 may be a base station in 5G. The base station in 5G may also be referred to as a transmission reception point (transmission reception point, TRP) or a next generation NodeB (generation NodeB, gNB). When the wireless communication system is an LTE communication system, the network device 101 may be an evolved NodeB (evolved NodeB, eNB). In embodiments of this application, an apparatus that is configured to implement a function of the network device may be a network device. Alternatively, an apparatus that can support the network device in implementing the function may be installed in the network device. For example, the apparatus is a chip system.

The terminal 102 is located in signal coverage of the network device 101. The terminal 102 may also be referred to as a terminal device, and is a device having a wireless transceiver function. The terminal 102 may be deployed on land, where the deployment includes indoor or outdoor, or handheld or vehicle-mounted deployment; or may be deployed on water (for example, on a ship); or may be deployed in the air (for example, on a plane, a balloon, or a satellite). The terminal 102 may be user equipment (user equipment, UE). The UE includes a handheld device, a vehicle-mounted device, a wearable device, or a computing device with a wireless communication function. For example, the UE may be a mobile phone (mobile phone), a tablet computer, or a computer with a wireless transceiver function. The terminal 102 may alternatively be a virtual reality (virtual reality, VR) terminal, an augmented reality (augmented reality, AR) terminal, a wireless terminal in industrial control, a wireless terminal in self driving, a wireless terminal in telemedicine, a wireless terminal in a smart grid, a wireless terminal in a smart city (smart city), a wireless terminal in a smart home (smart home), or the like. The terminal in embodiments of this application is mainly considered to be a terminal with low power consumption. For example, the terminal 102 may be simpler in hardware, for example, the terminal 102 does not have a high-precision crystal oscillator, a power amplifier, or a high-precision filter. In embodiments of this application, an apparatus that is configured to implement a function of the terminal may be referred to as a terminal. Alternatively, an apparatus that can support the terminal in implementing the function may be installed in the terminal. For example, the apparatus may be a chip system. The chip system may include a chip, or may include a chip and another discrete component.

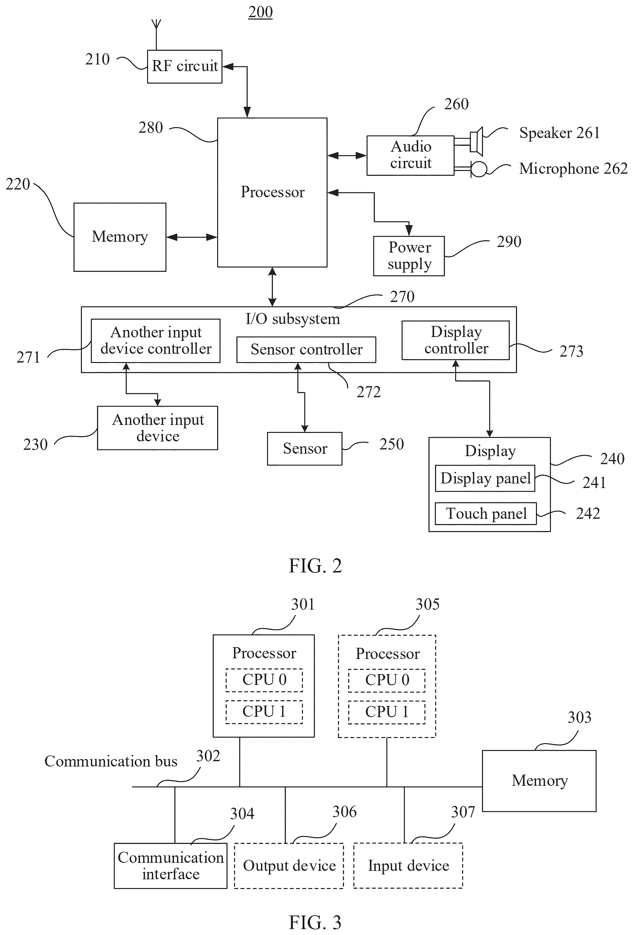

FIG. 2 is a diagram of a structure of a terminal according to an embodiment of this application. The terminal in this embodiment of this application may be implemented by using the terminal 200 shown in FIG. 2. As shown in FIG. 2, the terminal 200 includes components such as a radio frequency (radio frequency, RF) circuit 210, a memory 220, another input device 230, a display 240, a sensor 250, an audio circuit 260, an I/O subsystem 270, a processor 280, and a power supply 290. It may be understood by a person skilled in the art that, the terminal structure shown in FIG. 2 does not constitute a limitation on the terminal, and the terminal may include more or fewer components than those shown in the figure, or some components may be combined, some components may be separated, or the components may be arranged in different manners. A person skilled in the art may understand that the display 240 belongs to a user interface (UI, User Interface), and the terminal 200 may include more or fewer user interfaces than those shown in the figure.

The following describes each component of the terminal 200 in detail with reference to FIG. 2.

The RF circuit 210 may be configured to receive and send information, or receive and send a signal in a call process. For example, after receiving downlink information from a base station, the RF circuit 210 may transmit the downlink information to the processor 280 for processing. In addition, the RF circuit 210 may further send uplink data to the base station. In this embodiment of this application, after receiving sidelink information sent by another terminal, the RF circuit 210 may further transmit the sidelink information to the processor 280 for processing. In addition, the RF circuit 210 may further send the sidelink information processed by the processor 280 to the another terminal. The RF circuit 210 usually includes but is not limited to an antenna, at least one amplifier, a transceiver, a coupler, a low noise amplifier (low noise amplifier, LNA), a duplexer, and the like.

The memory 220 may be configured to store a software program and a module, and the processor 280 executes various functional applications of the terminal 200 and processes data by running the software program and the module that are stored in the memory 220. For example, the memory 220 may store a program used to implement the technical solutions of this application, and the processor 280 may execute the program to implement the data transmission method provided in embodiments of this application. The memory 220 may mainly include a program storage area and a data storage area. The program storage area may store an operating system, an application required by at least one function (for example, a sound play function or an image play function), and the like. The data storage area may store data (for example, audio data or a phone book) created based on use of the terminal 200, and the like. In addition, the memory 220 may include a high-speed random access memory, or may include a nonvolatile memory, for example, at least one magnetic disk storage device, a flash memory, or another volatile solid-state storage device.

The another input device 230 may be configured to receive entered digit or character information, and generate a button signal input related to user setting and function control of the terminal 200. For example, the another input device 230 may include but is not limited to one or more of a physical keyboard, a function button (such as a volume control button or an on/off button), a trackball, a mouse, a joystick, and an optical mouse (the optical mouse is a touch-sensitive surface that does not display a visual output, or an extension of a touch-sensitive surface formed by a touchscreen). The another input device 230 is connected to another input device controller 271 of the I/O subsystem 270, and performs signal interaction with the processor 280 under control of the another input device controller 271.

The display 240 may be configured to display information input by a user or information provided for the user, and various menus of the terminal 200, and may further receive a user input. For example, the display 240 may include a display panel 241 and a touch panel 242. The display panel 241 may be configured by using a liquid crystal display (liquid crystal display, LCD), an organic light-emitting diode (organic light-emitting diode, OLED), or the like. The touch panel 242, also referred to as a touchscreen, a touch-sensitive screen, or the like, may collect a contact operation or a non-contact operation of a user on or near the touch panel 242, for example, an operation and a motion-sensing operation that are performed by the user on or near the touch panel 242 by using any suitable object or accessory like a finger or a stylus, and drive a corresponding connection apparatus based on a preset program. The foregoing operations include operation types such as a single-touch control operation and a multi-touch control operation. Optionally, the touch panel 242 may include two parts: a touch detection apparatus and a touch controller. The touch detection apparatus detects a touch orientation and a posture of the user, detects a signal brought by a touch operation, and transmits the signal to the touch controller. The touch controller receives touch information from the touch detection apparatus, converts the touch information into information that can be processed by the processor 280, and then sends the information to the processor 280. In addition, the touch controller may further receive and execute a command sent by the processor 280. In addition, the touch panel 242 may be implemented in a plurality of types such as a resistive type, a capacitive type, an infrared ray, and a surface acoustic wave, or the touch panel 242 may be implemented by using any technology developed in the future. Further, the touch panel 242 may cover the display panel 241. The user may perform, based on content displayed on the display panel 241, an operation on or near the touch panel 242 covered by the display panel 241. The content displayed on the display panel 241 includes but is not limited to a soft keyboard, a virtual mouse, a virtual button, an icon, and the like. After detecting an operation on or near the touch panel 242, the touch panel 242 transmits information about the operation to the processor 280 by using the I/O subsystem 270 to determine a user input, and then the processor 280 provides a corresponding visual output on the display panel 241 based on the user input by using the I/O subsystem 270. Although in FIG. 2, the touch panel 242 and the display panel 241 are used as two independent components to implement input and output functions of the terminal 200, in some embodiments, the touch panel 242 and the display panel 241 may be integrated to implement input and output functions of the terminal 200.

The terminal 200 may further include at least one type of sensor 250, for example, a light sensor, a motion sensor, and another sensor. Specifically, the light sensor may include an ambient light sensor and a proximity sensor. The ambient light sensor may adjust luminance of the display panel 241 based on brightness of ambient light. The proximity sensor may power off the display panel 241 and/or backlight when the terminal 200 moves to an ear. As a type of motion sensor, an accelerometer sensor may detect magnitudes of accelerations in various directions (usually, three axes), and detect a value and a direction of gravity when the accelerometer sensor is static; and may be used in an application for recognizing a terminal posture (for example, landscape-portrait mode switching, a related game, or magnetometer posture calibration), a function related to vibration recognition (for example, a pedometer or tapping), and the like. The terminal 200 may also be provided with other sensors such as a gyroscope, a barometer, a hygrometer, a thermometer, and an infrared sensor. Details are not described herein again.

The audio circuit 260, a speaker 261, and a microphone 262 may provide an audio interface between the user and the terminal 200. The audio circuit 260 may transmit, to the speaker 261, a signal converted from received audio data, and the speaker 261 converts the signal into a sound signal for output. In addition, the microphone 262 converts a collected sound signal and sends the converted signal to the audio circuit 260, and the audio circuit converts the received signal into audio data, and then outputs the audio data to the RF circuit 210 for sending to another terminal, or outputs the audio data to the memory 220 for further processing.

The I/O subsystem 270 is configured to control an input/output external device, and may include another input device controller 271, a sensor controller 272, and a display controller 273. Optionally, one or more other input device controllers 271 receive a signal from the another input device 230 and/or send a signal to the another input device 230. The another input device 230 may include a physical button, like a press button or a rocker button, a dial, a slide switch, a joystick, a click wheel, and an optical mouse. It should be noted that the another input device controller 271 may be connected to any one or more of the foregoing input devices. The display controller 273 in the I/O subsystem 270 receives a signal from the display 240 and/or sends a signal to the display 240. After the display 240 detects a user input, the display controller 273 converts the detected user input into interaction with a user interface object displayed on the display 240, to implement human-machine interaction. The sensor controller 272 may receive a signal from one or more sensors 250 and/or send a signal to one or more sensors 250.

The processor 280 is a control center of the terminal 200, connects to various parts of the entire terminal by using various interfaces and lines, and performs various functions of the terminal 200 and processes data by running or executing a software program and/or a module that are/is stored in the memory 220 and invoking data stored in the memory 220, so as to perform overall monitoring on the terminal. Optionally, the processor 280 may include one or more processing units. Preferably, an application processor and a modem processor may be integrated into the processor 280. The application processor mainly processes an operating system, a user interface, an application, and the like. The modem processor mainly processes wireless communication. It may be understood that the modem processor may not be integrated into the processor 280.

The terminal 200 may further include the power supply 290, for example, a battery, that supplies power to each component. Preferably, the power supply may be logically connected to the processor 280 by using a power supply management system, to implement functions such as charging management, discharging management, and power consumption management by using the power supply management system.

Although not shown, the terminal 200 may further include components such as a camera and a Bluetooth module. Details are not described in embodiments of this application.

FIG. 3 is a diagram of a structure of a network device according to an embodiment of this application. A network device in embodiments of this application may be implemented by using the network device shown in FIG. 3. As shown in FIG. 3, the network device may include at least one processor 301, a communication bus 302, a memory 303, and at least one communication interface 304. It should be noted that the structure of the device shown in FIG. 3 does not constitute a limitation on the network device, and the network device may include more or fewer components than those shown in the figure, or some components may be combined, or the components may be arranged in different manners. This is not limited in embodiments of this application. The following describes each component of the network device in detail with reference to FIG. 3.

A processor 301 is a control center of the network device, and may be one processor or may be a general term of a plurality of processing elements. For example, the processor 301 may be a general-purpose central processing unit (Central Processing Unit, CPU), an application-specific integrated circuit (application-specific integrated circuit, ASIC), or one or more integrated circuits configured to control program execution of the solutions solution in this application, for example, one or more microprocessors (digital signal processors, DSP) or one or more field programmable gate arrays (field programmable gate arrays, FPGA). The processor 301 may perform various functions of the network device by running or executing a software program stored in the memory 303 and invoking data stored in the memory 303. For example, actions of the network device in embodiments described below may be performed by the processor of the network device by invoking data in the memory.

In an embodiment, the processor 301 may include one or more CPUs, for example, a CPU 0 and a CPU 1 in FIG. 3.

In an embodiment, the network device may include a plurality of processors, for example, the processor 301 and a processor 305 shown in FIG. 3. Each of the processors may be a single-core (single-CPU) processor, or may be a multi-core (multi-CPU) processor. The processor herein may be one or more devices, circuits, and/or processing cores configured to process data (for example, computer program instructions).

The communication bus 302 may include a channel for transferring information between the foregoing components. The communication bus 302 may be an industry standard architecture (industry standard architecture, ISA) bus, a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of indication, the bus is indicated by only one bold line in FIG. 3. However, it does not indicate that there is only one bus or only one type of bus.

The memory 303 may be a read-only memory (read-only memory, ROM) or another type of static storage device that can store static information and instructions, a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact optical disc, a laser disc, an optical disc, a digital versatile disc, a Blu-ray disc, or the like), a magnetic disk storage medium or another magnetic storage device, or any other medium that can be used to carry or store expected program code in a form of instructions or a data structure and that can be accessed by a computer. However, this is not limited thereto. The memory 303 may exist independently, and is connected to the processor 301 through the communication bus 302. The memory 303 may alternatively be integrated with the processor 301. The memory 303 is configured to store a software program for executing the solutions provided in embodiments of this application, and the processor 301 controls execution of the software program.

The communication interface 304 is configured to communicate with another device or a communication network, for example, an Ethernet, a RAN, or a wireless local area network (wireless local area network, WLAN). The communication interface 304 may include a receiving unit to implement a receiving function, and a sending unit to implement a sending function.

In an embodiment, the network device may further include an output device 306 and an input device 307. The output device 306 communicates with the processor 301, and may display information in a plurality of manners. For example, the output device 306 may be a liquid crystal display (liquid crystal display, LCD), a light-emitting diode (light-emitting diode, LED) display device, a cathode ray tube (cathode ray tube, CRT) display device, or a projector (projector). The input device 307 communicates with the processor 301, and may receive an input in a plurality of manners. For example, the input device 307 may be a mouse, a keyboard, a touchscreen device, or a sensing device.

The foregoing network device may be a general-purpose network device or a specialpurpose network device, for example, may be a desktop computer, a portable computer, or a network server. This is not limited in embodiments of this application.

In the following, a data transmission method provided in embodiments of this application is described in detail. It may be understood that the method provided in embodiments of this application may be performed by a terminal and a network device, or may be performed by modules (for example, chips) in the terminal and the network device. The following describes the data transmission method provided in embodiments of this application by using a first terminal and a network device as execution bodies.

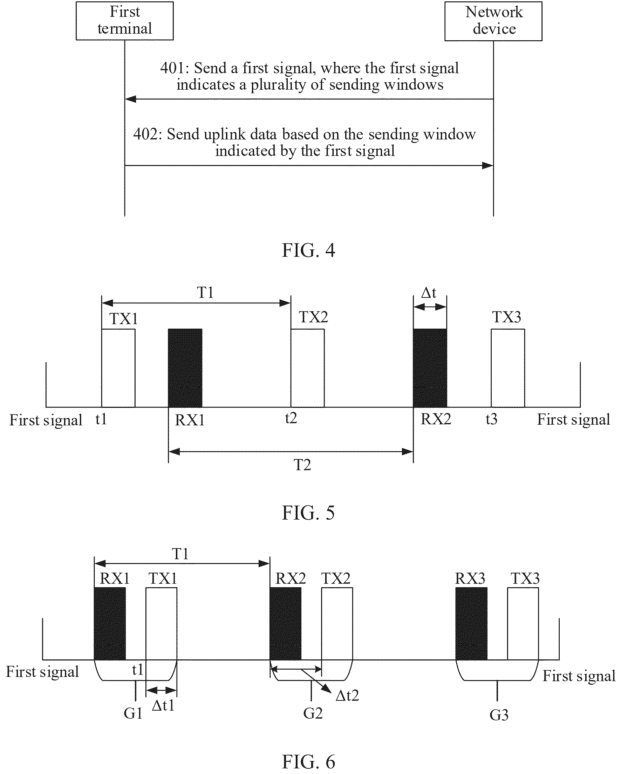

FIG. 4 is a flowchart of a data transmission method according to an embodiment of this application. As shown in FIG. 4, the method includes the following steps.

Step 401: A network device sends a first signal, and a first terminal receives the first signal, where the first signal indicates a plurality of sending windows.

In this embodiment of this application, the network device may send the first signal to a plurality of terminals including the first terminal, and indicate the plurality of sending windows by using the first signal. Correspondingly, the first terminal may receive the first signal, and determine the plurality of sending windows based on the first signal. The first signal may be a periodically sent signal. For example, the first signal may be a beacon (beacon) signal or a synchronization signal. The plurality of terminals may be terminals within coverage of one or more cells provided by the network device.

In a first implementation, the network device may indicate, by using the first signal, a repetition periodicity of a plurality of periodically occurring sending windows. After receiving the first signal, the first terminal determines the repetition periodicity of the sending window based on the first signal, and then determines, based on the repetition periodicity of the sending window, the plurality of periodically occurring sending windows.

For example, the first signal may carry a window configuration parameter, and the window configuration parameter includes the repetition periodicity of the sending window. In this way, the first terminal may obtain the window configuration parameter from the first signal, to obtain the repetition periodicity of the sending window.

It should be noted that in this embodiment of this application, based on different implementations of the sending window, the network device indicates the repetition periodicity of the sending window by using the first signal in different manners. Correspondingly, the first terminal determines the plurality of sending windows based on the repetition periodicity of the sending window in different manners. For example, implementations of the sending window may include the following two cases.

Case **1**: The sending window occurs periodically.

In this case, the network device may use, as the repetition periodicity of the sending window, a time interval between two adjacent sending windows, for example, an interval between start time of two sending windows.

Optionally, in this case, the window configuration parameter may further include start time of a 1st sending window and window duration of the sending window. Alternatively, the start time of the 1st sending window and the window duration of the sending window may be preconfigured in the network device and the terminal. Alternatively, the window configuration parameter may include one of the two parameters, and the other parameter is preconfigured in the network device and the terminal. This is not limited in this embodiment of this application.

After obtaining the repetition periodicity of the sending window, the first terminal may obtain the start time of the 1st sending window and the window duration of the sending window that are included or preconfigured in the window configuration parameter. Start time of each sending window after the 1st sending window is determined and obtained based on the start time of the 1st sending window and the repetition periodicity of the sending window. Then, the plurality of periodically occurring sending windows are determined based on the start time of each sending window and the window duration of the sending window.

For example, as shown in FIG. 5, the repetition periodicity of the sending window carried in the first signal is T1. The start time of the 1st sending window is t1, and the window duration of the sending window is Δt. In this way, start time of a 2nd sending window is t2=t1+T1, start time of a 3rd sending window is t3=t1 +2*T1, and the like. Three sending windows shown in FIG. 5 may be determined in a signal periodicity of the first signal, which are respectively TX1, TX2, and TX3.

Optionally, the window configuration parameter may further include a quantity of sending windows, to indicate a quantity of sending windows between a current first signal to be sent and a next first signal, that is, a quantity of sending windows in one signal periodicity. Correspondingly, the first terminal may further determine, between the current first signal and the next first signal by using the foregoing method, a quantity of sending windows whose quantity is equal to the quantity of sending windows.

Optionally, when the sending window periodically occurs, a receiving window may also periodically occur. In this case, the window configuration parameter sent by the network device may further include a repetition periodicity of the receiving window. In this way, the first signal may further indicate the repetition periodicity of the receiving window, to indicate a plurality of periodically occurring receiving windows. The repetition periodicity of the receiving window may be equal to or not equal to the repetition periodicity of the sending window.

Optionally, the window configuration parameter may further include start time of a 1st receiving window and window duration of the receiving window. Alternatively, the start time of the 1st receiving window and the window duration of the receiving window may be preconfigured in the network device and the terminal. Alternatively, the window configuration parameter may include one of the two parameters, and the other parameter is preconfigured in the network device and the terminal. The window duration of the receiving window may be equal to or not equal to the window duration of the sending window. If the window duration of the receiving window is the same as the window duration of the sending window, the window configuration parameter may include one piece of window duration, or one piece of window duration may be preconfigured in the terminal and the network device. In addition, the start time of the 1st receiving window may be before the start time of the 1st sending window, or the start time of the 1st receiving window may be after the start time of the 1st sending window. The receiving window and the sending window do not overlap.

Optionally, the window configuration parameter may further carry a quantity of receiving windows, to indicate a quantity of receiving windows between the current first signal to be sent and the next first signal, that is, a quantity of receiving windows in one signal periodicity. The quantity of receiving windows may be equal to or not equal to the quantity of sending windows. If the quantity of receiving windows is the same as the quantity of sending windows, the window configuration parameter may include a quantity of windows, or a quantity of windows may be preconfigured in the terminal and the network device.

The first terminal may obtain the repetition periodicity of the receiving window from the window configuration parameter, and then determine, based on the repetition periodicity of the receiving window, the plurality of periodically occurring receiving windows with reference to the foregoing described method for determining the plurality of periodically occurring sending windows. Details are not described herein again. For example, as shown in FIG. 5, the repetition periodicity of the receiving window is T2, and two receiving windows may be determined in the signal periodicity of the first signal, which are respectively RX1 and RX2.

Case 2: Each of the plurality of periodically occurring sending windows belongs to one window combination, each window combination may include at least one receiving window and at least one sending window, and time intervals between any two adjacent window combinations are equal.

In this case, the network device may use, as the repetition periodicity of the sending window, a time interval between sending windows that are in any two adjacent window combinations and that are at a same arrangement position. In this case, the repetition periodicity of the sending window is a repetition periodicity of the window combination.

Optionally, in this case, the window configuration parameter may further include at least one of window duration, a time interval between two adjacent windows in a window combination, and start time of any window in a 1st window combination. Alternatively, the foregoing parameters may be preconfigured in the network device and the terminal. Alternatively, the window configuration parameter includes a part of the foregoing parameters, and the other part of the foregoing parameters are preconfigured in the network device and the terminal. This is not limited in this embodiment of this application.

After obtaining the repetition periodicity of the sending window, the first terminal may obtain the window duration, the time interval between two adjacent windows in the window combination, and the start time of any window in the 1st window combination that are included in or preconfigured in the window configuration parameter. Then, start time of each window in the 1st window combination is determined based on the start time of any window in the 1st window combination and a time interval between two adjacent windows. Moreover, the first terminal may determine, based on the start time of each window in the 1st window combination and the repetition periodicity of the sending window, start time of windows that are at a same arrangement position and that are in each subsequent window combination, and determine, based on start time and window duration of each window in each window combination, a plurality of windows including the sending window.

For example, as shown in FIG. 6, each window combination includes one receiving window and one sending window, the receiving window is located before the sending window, and a repetition periodicity of the sending window is T1, in other words, a repetition periodicity of the window combination is T1. Window duration is $\Delta t1$, start time of a sending window TX1 in a 1st window combination G1 is t1, and a time interval between two adjacent windows in the window combination is $\Delta t2$. The first terminal may determine that start time of a receiving window RX1 in the 1st window combination is t1-$\Delta t2$, start time of a sending window TX2 in a 2nd window combination G2 is t1+T1, start time of a receiving window RX2 is t1-$\Delta t2$+T1, and the like. Start time of each window may be determined. A window can be determined based on start time and window duration of each window.

Optionally, when one window combination includes one receiving window and one sending window, the sending window in the window combination may also be located before the receiving window.

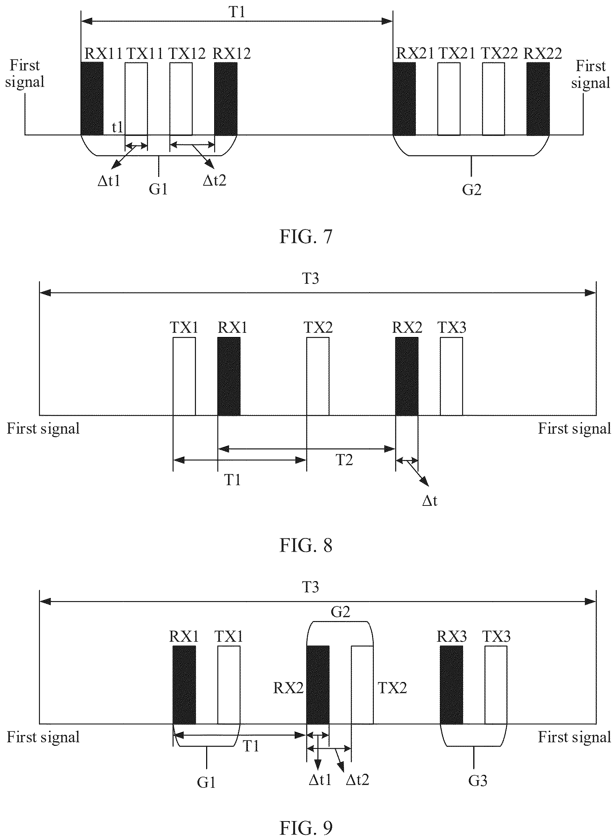

For another example, as shown in FIG. 7, each window combination includes two receiving windows and two sending windows. The two sending windows are located between the two receiving windows, and a repetition periodicity of the sending window is T1, in other words, a repetition periodicity of the window combination is T1. Window duration is $\Delta t1$, start time of a 1st sending window in a 1st window combination is t1, and a time interval between two adjacent windows in one window combination is $\Delta t2$. The first terminal may determine that start time of a 2nd sending window in the 1st window combination is t1+$\Delta t2$, start time of a 1st receiving window in the 1st window combination is t1-$\Delta t2$, and start time of a 2nd receiving window is t1+2*$\Delta t2$. Start time of an ith sending window in a 2nd window combination is equal to start time of an ith sending window in the 1st window combination plus T1, and start time of an ith receiving window in the 2nd window combination is equal to start time of an ith receiving window in the 1st window combination plus T1, and the like. Start time of each window in each window combination may be obtained. A window can be determined based on start time and window duration of each window.

It should be noted that, in the window combination shown in FIG. 7, time intervals between every two adjacent windows may also be different. For example, in a window combination, a time interval between a 1st window and a 2nd window is not equal to a time interval between the 2nd window and a 3rd window.

Optionally, FIG. 6 and FIG. 7 are two examples of a window combination including a sending window provided in embodiments of this application. There may also be another implementation for quantities and arrangement manners of receiving windows and sending windows in the window combination. Correspondingly, the repetition periodicity of the sending window may be determined with reference to the foregoing manner. This is not limited in this embodiment of this application.

Optionally, the window configuration parameter may further carry a quantity of window combinations, to indicate a quantity of window combinations between the currently sent first signal and the next first signal.

In a second implementation, the network device may indicate, by using the first signal, a time position of the sending window relative to the first signal. The first terminal may determine, based on the first signal, the time position of the sending window relative to the first signal, and determine, based on the time position of the sending window relative to the first signal, a plurality of periodically occurring sending windows. According to different implementations of the sending window, manners of indicating, by using the first signal, the time position of the sending window relative to the first signal are different, and correspondingly, manners of determining the plurality of periodically occurring sending windows are also different. For example, implementations of the sending window may include the following two cases.

Case 1: When the first signal is a periodically sent signal, the sending window periodically occurs in a signal periodicity of the first signal.

In this case, the first signal may carry a window configuration parameter, and the window configuration parameter may include the signal periodicity of the first signal and a quantity of sending windows in the signal periodicity. The signal periodicity of the first signal refers to a time interval between any two adjacent first signals. In this way, the network device indicates, by using the signal periodicity of the first signal and the quantity of sending windows in the signal periodicity, the time position of the sending window relative to the first signal.

After receiving the first signal, the first terminal may determine, based on the signal periodicity of the first signal and the quantity of sending windows in the signal periodicity, the time position of the sending window relative to the first signal, and determine, based on the time position of the sending window relative to the first signal and window duration of the sending window, the plurality of periodically occurring sending windows. The window configuration parameter may further include the window duration of the sending window, or the window duration of the sending window may be preconfigured in the terminal and the network device.

For example, as shown in FIG. 8, the signal periodicity of the first signal is T3, the quantity of sending windows in the signal periodicity is 3, and the window duration of the sending window is $\Delta t$. In this case, the signal periodicity and the quantity of sending windows may indicate that, in the signal periodicity, a time interval between a 1st sending window and the current first signal is $T3/4$, a time interval between a 2nd sending window and the current first signal is $T3/2$, and a time interval between a 3rd sending window and the current first signal is $(3*T3)/4$. In this way, three sending windows shown in FIG. 8 may be determined, which are respectively TX1, TX2, and TX3.

Optionally, when the signal periodicity of the first signal includes the periodically occurring sending window, the signal periodicity may further include a periodically occurring receiving window. In this case, the window configuration parameter may further include a quantity of receiving windows in the signal periodicity, to indicate a time position of the receiving window relative to the first signal. The quantity of receiving windows is not equal to the quantity of sending windows. Correspondingly, the first terminal may further determine, based on the quantity of receiving windows and the signal periodicity of the first signal, the time position of the receiving window relative to the first signal, and determine, based on the time position of the receiving window relative to the first signal and window duration of the receiving window, a plurality of periodically occurring receiving windows. The window duration of the receiving window may be preconfigured in the terminal and the network device, or the window configuration parameter may include the window duration of the receiving window. In addition, the window duration of the receiving window may be equal to or not equal to the window duration of the sending window. If the window duration of the receiving window is equal to the window duration of the sending window, the window configuration parameter may include one piece of window duration, or one piece of window duration is preconfigured in the network device and the terminal.

For example, as shown in FIG. 8, the quantity of receiving windows is 2, and the window duration of the receiving window is $\Delta t$. In this case, the signal periodicity of the first signal and the quantity of receiving windows may indicate that, in the signal periodicity, a time interval between a 1st receiving window and the current first signal is $T3/3$, and a time interval between a 2nd receiving window and the current first signal is $(2*T3)/3$. A time interval between two adjacent

receiving windows is $T3/3$, in other words, a repetition periodicity of the sending window in the signal periodicity is $T3/3$. In this way, two receiving windows may be determined in the signal periodicity of the first signal, which are respectively RX1 and RX2.

Case 2: When the first signal is a periodically sent signal, the sending window may be a window included in a window combination that periodically occurs in a signal periodicity of the first signal. Each window combination may include at least one receiving window and at least one sending window.

In this case, the first signal may carry a window configuration parameter, and the window configuration parameter may include the signal periodicity of the first signal, a quantity of window combinations in the signal periodicity, and a time interval between two adjacent windows in the window combination. In this way, the network device may indicate, by using the signal periodicity of the first signal, the quantity of window combinations in the signal periodicity, and the time interval between two adjacent windows in the window combination, a time position of a sending window in a plurality of periodically occurring window combinations relative to the first signal. Correspondingly, the first terminal may determine, based on the signal periodicity of the first signal and the quantity of window combinations in the signal periodicity, a time position of each window combination relative to the first signal, and determine, based on the time interval between two adjacent windows in the window combination and the time position of each window combination relative to the first signal, time positions of each sending window and each receiving window in the window combination relative to the first signal. Then, the first terminal may determine each sending window and each receiving window based on the time position of each window in the window combination relative to the first signal and window duration.

The window duration may be preconfigured in the network device and the terminal, or the window configuration parameter may further include the window duration. The window duration is less than the time interval between two adjacent windows in the window combination. In addition, window duration of each receiving window and window duration of each sending window may be the same or may be different. When the window duration of the receiving window is different from the window duration of the sending window, the window duration may include the window duration of the receiving window and the window duration of the sending window.

Optionally, the window configuration parameter may not include the time interval between two adjacent windows in the window combination. In this case, the time interval between two adjacent windows in the window combination may be preconfigured in the network device and the terminal.

For example, as shown in FIG. 9, each window combination includes a receiving window and a sending window, the receiving window is located before the sending window, the signal periodicity of the first signal is T3, a quantity of window combinations in the signal periodicity is 3, a time interval between two adjacent windows in the window combination is ∆t2, and window duration is ∆t1. In this case, the signal periodicity, the quantity of window combinations, and the time interval between two adjacent windows may indicate that, in the signal periodicity, a time interval between start time of a receiving window in a 1st window combination and the current first signal is $T3/4$, and a time interval between start time of a sending window in the 1st window combination and the current first signal is $\frac{T3}{4} + \Delta t2$. A time interval between start time of a receiving window in a 2nd window combination and the current first signal is $T3/2$, a time interval between start time of a sending window in the 2nd window combination and the current first signal is $\frac{T3}{2} + \Delta t2$, and the like. In this way, sending windows and receiving windows in a plurality of window combinations shown in FIG. 9 may be determined based on the time position of each window relative to the first signal and the window duration.

Optionally, there may also be another implementation for quantities and arrangement manners of receiving windows and sending windows in the window combination. For example, one window combination includes one receiving window and one sending window, and the sending window is located before the receiving window; or one window combination includes two receiving windows and two sending windows, and the two sending windows are located before the two receiving windows. In this case, reference may still be made to the foregoing method to indicate the time position of each window in the window combination relative to the first signal.

In a third implementation, the network device may indicate a window configuration mode by using the first signal, and indicate the plurality of sending windows by using the window configuration mode.

For example, a mapping relationship between an identifier of the window configuration mode and a window configuration parameter may be preconfigured in the network device and the terminal, and different window configuration modes correspond to different window configuration parameters. For example, each window configuration method in the first implementation and the second implementation may be a window configuration mode, and corresponds to a window configuration parameter. Based on this, the first signal may carry an identifier of the window configuration mode, and a corresponding window configuration parameter may be indicated by using the identifier of the window configuration mode, to indicate the plurality of sending windows based on the window configuration parameter. Correspondingly, after receiving the first signal, the first terminal obtains the identifier of the window configuration mode carried in the first signal, obtains the corresponding window configuration parameter based on the identifier of the window configuration mode, and determines the plurality of sending windows based on the window configuration parameter. Optionally, the first terminal may further determine a plurality of receiving windows based on the window configuration parameter.

It should be noted that the foregoing is merely some possible window configuration manners shown in this embodiment of this application. The plurality of sending windows indicated by the first signal may alternatively be aperiodically occurring windows. Similarly, the plurality of receiving windows indicated by the first signal may alternatively be aperiodically occurring windows. In this case, the first signal may carry the window configuration parameter, and a window can be determined by combining a parameter included in the window configuration parameter and a parameter preconfigured in the terminal and the network device.

Optionally, the first signal may not only indicate a sending window, but also indicate a frequency resource of the sending window, or the frequency resource of the sending window may be preconfigured. When the first signal further indicates a receiving window, the first signal may further indicate a frequency resource of the receiving window, or the frequency resource of the receiving window may be preconfigured.

In addition, the sending window mentioned in this embodiment of this application is a time window used by the terminal to send uplink data. Therefore, the sending window is also a time window used by the network device to receive uplink data. In other words, the sending window in this embodiment of this application is a sending window of the terminal and a receiving window of the network device. Based on this, the sending window in this embodiment of this application may also be referred to as an uplink window. The receiving window mentioned in this embodiment of this application is a time window used by the terminal to receive downlink data. Therefore, the receiving window is also a time window used by the network device to send downlink data. In other words, the receiving window in this embodiment of this application is a receiving window of the terminal and a sending window of the network device. Based on this, the receiving window in this embodiment of this application may also be referred to as a downlink window.

Step 402: The first terminal sends uplink data based on the sending window indicated by the first signal, and the network device receives the uplink data based on the sending window.

After determining the plurality of sending windows, the first terminal may send the uplink data based on the plurality of sending windows.

For example, it can be learned from the descriptions in step 401 that the first signal may further indicate the plurality of receiving windows while indicating the plurality of sending windows. Based on this, in some possible cases, the network device may send first data in a first receiving window. After receiving the first data in the first receiving window, the first terminal sends feedback data of the first data in an $n^{th}$ sending window after the first receiving window, where n is an integer greater than 0. Correspondingly, the network device may receive the feedback data of the first data in the $n^{th}$ sending window after the first receiving window.

In this embodiment of this application, when the network device has the first data to be sent to the first terminal, the network device may send the first data in the first receiving window. The first data may include terminal information of the first terminal, and the terminal information of the first terminal may be an address and/or an identifier of the first terminal. The address of the first terminal may be a MAC address.

It should be noted that, considering that the terminal in this embodiment of this application may not have a high-precision crystal oscillator, the network device may send the first data in the first receiving window based on a crystal oscillator frequency offset of the terminal. For example, the crystal oscillator frequency offset of the terminal is 10 ppm, to be specific, within 100s, clock drift of the terminal is 1 ms. Because the clock drift of the terminal may be forward or backward, in this embodiment of this application, the network device may send the first data 1 ms after the first receiving window starts. In the following, when the network device sends downlink data to the terminal in any receiving window, the downlink data may be sent based on the crystal oscillator frequency offset of the terminal in the foregoing manner.

The first terminal may monitor the downlink data sent by the network device in the first receiving window. After obtaining the first data through monitoring, the first terminal may detect whether terminal information in the first data is the same as the terminal information of the first terminal. After detecting that the terminal information in the first data is the same as the terminal information of the first terminal, the first terminal receives the first data. Then, the first terminal may send the feedback data of the first data to the network device in the $n^{th}$ sending window after the first receiving window.

The $n^{th}$ sending window after the first receiving window may be a sending window randomly selected after the first receiving window, or may be a sending window selected based on a predefined rule. In addition, the first receiving window may be one of the plurality of periodically occurring receiving windows, and the $n^{th}$ sending window after the first receiving window may be one of the plurality of periodically occurring sending windows. Alternatively, the first receiving window and the $n^{th}$ sending window may be windows in a periodically occurring window combination. For example, the first receiving window and the $n^{th}$ sending window after the first receiving window may be windows in a same window combination, or may be windows in different window combinations.

Optionally, if there is still second data to be sent in the first terminal, the first terminal may further send the second data to the network device in the $n^{th}$ sending window after the first receiving window. In other words, the first terminal may send both the feedback data of the first data and the second data in the $n^{th}$ sending window after the first receiving window. The feedback data of the first data and the second data may be sent in different time periods in the $n^{th}$ sending window.

For example, as shown in FIG. 5 or FIG. 8, when the first receiving window is RX1, the $n^{th}$ sending window after the first receiving window may be TX2, and the first terminal may send the feedback data of the first data and the second data in TX2.

For another example, as shown in FIG. 6, the first receiving window is the receiving window RX1 in the window combination G1, and the $n^{th}$ sending window after the first receiving window may be the sending window TX1 in the window combination G1. After receiving the first data in the receiving window RX1 in the window combination G1, the first terminal sends the feedback data of the first data and the second data in the sending window TX1 in the window combination G1.

Optionally, in another possible implementation, if there is still second data to be sent in the first terminal, the first terminal may send the second data in a $k^{th}$ sending window after the first receiving window, where k is not equal to n. In other words, the first terminal may respectively send the feedback data of the first data and the second data in two sending windows after the first receiving window. Herein, k may be greater than n. In this case, the first terminal first sends the feedback data of the first data in the $n^{th}$ sending window after the first receiving window, and then sends the second data in the $k^{th}$ sending window. Alternatively, k may be less than n. In this case, the first terminal first sends the second data in the $k^{th}$ sending window after the first receiving window, and then sends the feedback data of the first data in the $n^{th}$ sending window.

The network device may monitor, in the $k^{th}$ sending window after the first receiving window, the uplink data sent by the terminal, and after obtaining, through monitoring, the second data sent by the first terminal, the network device receives the second data.

Optionally, after receiving the second data, the network device may further send feedback data of the second data in an $m^{th}$ receiving window after the $k^{th}$ sending window after the first receiving window. Correspondingly, the first terminal may receive the feedback data of the second data in the $m^{th}$ receiving window after the $k^{th}$ sending window after the first receiving window. Herein, m is an integer greater than 0.

For example, as shown in FIG. 7, when the first receiving window is a receiving window RX11 in the window combination G1 and n is less than k, the $n^{th}$ sending window after the first receiving window may be a sending window TX11 in the window combination G1, the $k^{th}$ sending window after the first receiving window may be a sending window TX12 in the window combination G1, the $m^{th}$ receiving window after the $k^{th}$ sending window after the first receiving window may be a receiving window RX12 in the window combination G1. In other words, after receiving the first data in the receiving window RX11, the first terminal may send the feedback data of the first data in the sending window TX11, and then send the second data in the sending window TX12, and receive the feedback data of the second data in the receiving window RX12.

Optionally, in some possible cases, a data volume of the second data may be large. Based on this, if the first terminal determines, based on the data volume of the second data, that duration required for sending the second data is greater than window duration of the $k^{th}$ sending window after the first receiving window, the first terminal may send a sending window duration adjustment request to the network device, to adjust the window duration of the $k^{th}$ sending window after the first receiving window. Then, the first terminal may send, based on adjusted window duration, the second data in the $k^{th}$ sending window after the first receiving window. Correspondingly, the network device may receive, based on the adjusted window duration, the second data in the $k^{th}$ sending window after the first receiving window.

For example, if k is greater than n, the first terminal may send the sending window duration adjustment request in the $n^{th}$ sending window after the first receiving window. If k is less than n, the first terminal may send the sending window duration adjustment request before the $k^{th}$ sending window after the first receiving window. The window duration adjustment request may carry target window duration, and the target window duration is not less than the duration required for sending the second data. Optionally, the window duration adjustment request may also carry the data volume of the second data.

After sending the window duration adjustment request, the first terminal may use the target window duration as the window duration of the $k^{th}$ sending window after the first receiving window, and send the second data in the $k^{th}$ sending window after the first receiving window. Correspondingly, after receiving the window duration adjustment request, the network device may also receive the second data in the $k^{th}$ sending window after the first receiving window by using the target window duration.

Optionally, in some possible cases, after receiving the window duration adjustment request, the network device may further send, before the $k^{th}$ sending window after the first receiving window, third information to the first terminal, where the third information is used to respond to the window duration adjustment request.

For example, the third information may be acknowledgment information or rejection information. The acknowledgment information indicates that the window duration of the $k^{th}$ sending window after the first receiving window is agreed to be adjusted, and the rejection information indicates that the window duration of the $k^{th}$ sending window after the first receiving window is rejected to be adjusted. After receiving the third information, if the third information is the acknowledgment information, the first terminal sends the second data in the $k^{th}$ sending window after the first receiving window based on the target window duration. Correspondingly, after sending the third information, the network device may receive the second data in the $k^{th}$ sending window after the first receiving window based on the target window duration. If the third information is the rejection information, the first terminal continues to send a part of the second data in the $k^{th}$ sending window after the first receiving window by using current window duration, and sends the remaining part of the second data in the $i^{th}$ sending window after the $k^{th}$ sending window after the first receiving window. A specific segmented transmission manner may be predefined or pre-negotiated. Correspondingly, the network device also continues to receive a part of the second data in the $k^{th}$ sending window after the first receiving window by using the current window duration, and receives the remaining part of the second data in the $i^{th}$ sending window after the $k^{th}$ sending window after the first receiving window.

Optionally, the third information may also be information that indicates to adjust the window duration of the $k^{th}$ sending window after the first receiving window. In this case, when determining to agree to adjust the window duration of the $k^{th}$ sending window after the first receiving window, the network device may send the third information to the first terminal. When rejecting to adjust the window duration of the $k^{th}$ sending window after the first receiving window, the network device may not respond to the window duration adjustment request. Correspondingly, after receiving the third information, the first terminal sends the second data in the $k^{th}$ sending window after the first receiving window based on the target window duration. If the third information is not received, the first terminal continues to send the second data in the $k^{th}$ sending window after the first receiving window by using the current window duration.

Optionally, in some possible cases, the first signal is sent by the network device to the plurality of terminals including the first terminal. Therefore, the plurality of terminals may configure a same sending window and a same receiving window based on the first signal. In this case, downlink data sent by the network device in a specific receiving window indicated by the first signal may be sent to the first terminal, or may be sent to another terminal. Based on this, if the first terminal detects, in the first receiving window, third data sent by the network device to the another terminal, and there is the second data to be sent, the first terminal may send the second data in an $r^{th}$ sending window after the first receiving window, where r is an integer greater than 1.

It should be noted that the network device may send the third data in the first receiving window. The third data may carry terminal information of a second terminal, to indicate that the third data is sent to the second terminal. The second terminal and the first terminal are not a same terminal.

The first terminal may monitor the downlink data sent by the network device in the first receiving window. After obtaining the third data through monitoring, the first terminal may detect whether the terminal information included in the third data is the same as the terminal information of the first terminal. Because the third data is sent to the second terminal and carries the terminal information of the second terminal, the first terminal detects that the terminal information included in the third data is different from the terminal information of the first terminal. In this case, the first terminal may determine that the third data is sent by the network device to the another terminal instead of being sent to the first terminal. In this case, considering that after receiving the third data, the second terminal may send feedback data of the third data to the network device in the $n^{th}$ sending window after the first receiving window, if there is the second data to be sent, the first terminal may send the second data to the network device in the $r^{th}$ sending window after the first receiving window. Herein, n is an integer greater than 0, r is an integer greater than 1, and r is greater than n.

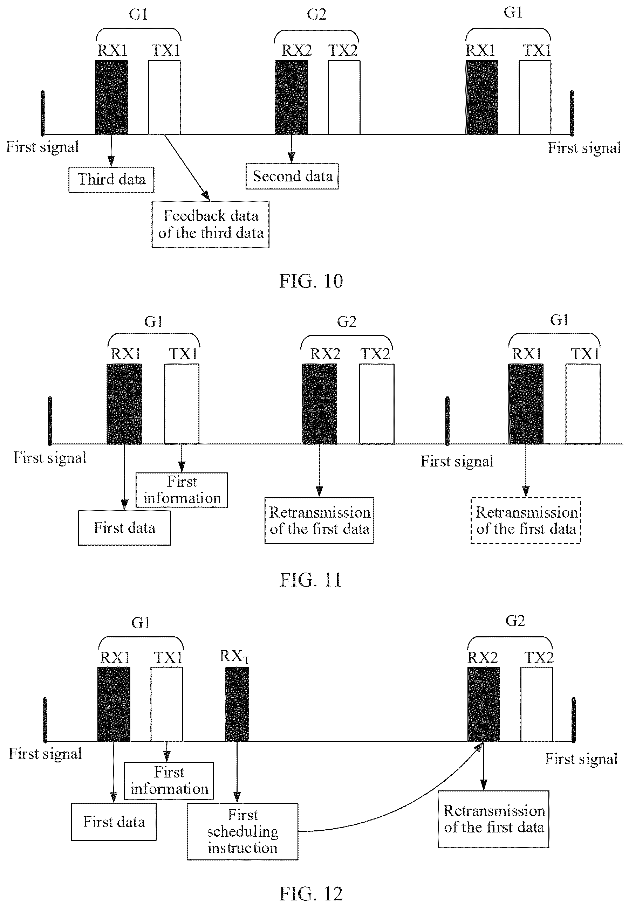

For example, as shown in FIG. 10, the network device sends, in a receiving window RX1 of a $1^{st}$ window combination G1 in a current signal periodicity, the third data including the terminal information of the second terminal. After obtaining the third data through monitoring, the second terminal determines that the third data includes the terminal information of the second terminal, receives the third data, and then sends the feedback data of the third data to the network device in a sending window TX1 of the $1^{st}$ window combination G1. After obtaining the third data in the receiving window RX1 through monitoring, the first terminal determines that the third data does not include the terminal information of the first terminal, and the third data is third data sent to the another terminal instead of being sent to the first terminal. In this case, because the first terminal considers that the terminal that receives the third data needs to occupy the sending window TX1 to feed back the feedback data of the third data to the network device, the first terminal does not send the second data to be sent in the sending window TX1, but sends the second data in a sending window after the sending window TX1. For example, as shown in FIG. 10, the second data may be sent in a sending window TX2 of a $2^{nd}$ window combination G2.

Optionally, after the first terminal obtains, through monitoring in the first receiving window, the third data sent by the network device to the another terminal, the first terminal may alternatively determine, by measuring a channel state of the $n^{th}$ sending window after the first receiving window, whether the $n^{th}$ sending window is occupied. If it is determined that the $n^{th}$ sending window after the first receiving window is occupied, the first terminal does not send the second data in the $n^{th}$ sending window, but sends the second data in the $r^{th}$ sending window after the first receiving window. If it is determined that the $n^{th}$ sending window after the first receiving window is not occupied, the first terminal sends the second data in the $n^{th}$ sending window after the first receiving window.

The first terminal may measure received signal strength in the $n^{th}$ sending window after the first receiving window. If the received signal strength is greater than a reference threshold, the first terminal determines that the channel state of the $n^{th}$ sending window after the first receiving window is a busy state, in other words, the $n^{th}$ sending window after the first receiving window is occupied.

Optionally, in another possible implementation, the first terminal detects, in the first receiving window, the third data sent by the network device to the another terminal, or may send the second data to the network device in a second time period after a first time period in the $n^{th}$ sending window after the first receiving window.

The first time period in the $n^{th}$ sending window after the first receiving window may be used by the second terminal to send the feedback data of the third data. Duration of the first time period may be preconfigured in each terminal, or may be indicated by the network device to each terminal. In this way, after obtaining, through monitoring, the third data sent by the network device to the second terminal, the first terminal may wait for the second terminal to feed back the feedback data of the third data in the first time period in the first receiving window, and then send the second data in the second time period in the first receiving window.

Optionally, the first time period in the $n^{th}$ sending window after the first receiving window may be an occupied time period determined by the first terminal by measuring the channel state, and the second time period is an unoccupied time period determined by the first terminal by measuring the channel state. In other words, the first terminal may start to measure the channel state from start time of the $n^{th}$ sending window after the first receiving window. When detecting that the channel state changes from a busy state to an idle state and remains in the idle state for a phase of time, the first terminal may determine that the first time period ends and the second time period starts. In this case, the first terminal may start to send the second data. For an implementation of measuring the channel state, refer to the foregoing related descriptions. Details are not described herein again.

In this embodiment of this application, the network device may send the first signal to the terminal, to indicate the plurality of sending windows. Based on this, the terminal may send uplink data to the network device based on the sending window indicated by the first signal. Correspondingly, the network device only needs to monitor, in the sending window indicated by the first signal, the uplink data sent by the terminal, and does not need to perform real-time monitoring, to reduce power consumption of the network device. In addition, the first signal may further indicate the plurality of receiving windows. Based on this, the network device may send downlink data to the terminal based on the receiving window. Correspondingly, the terminal only needs to monitor the downlink data of the network device in the receiving window, and does not need to perform real-time monitoring, to reduce power consumption of the terminal.

In addition, in this embodiment of this application, the network device may configure a window based on a service requirement. In this way, power consumption of the network device and the terminal can be reduced while ensuring that a service latency requirement is met.

In this embodiment of this application, the network device may indicate the window configuration mode by using the first signal. In this way, the terminal may switch window configuration based on the indicated window configuration mode. In this way, in different service scenarios, different window configuration modes may be used to meet requirements of a plurality of scenarios.

Finally, in this embodiment of this application, the network device indicates, by using the first signal, a window for receiving and sending data. In this way, when transmitting data, the network device and the terminal do not need to send information such as capability information through handshake, to reduce handshake data exchanged between the terminal and the network device.

The foregoing step 402 mainly describes an implementation process in which the first terminal sends uplink data to the network device based on the sending window and the network device sends downlink data to the first terminal based on the receiving window. In some possible cases, the downlink data received by the terminal may fail to be decoded, and the uplink data received by the network device may also fail to be decoded. Based on this, the terminal or the network device may further transmit, based on a window indicated by the first signal, retransmission of data that fails to be decoded. For example, data retransmission may include the following two cases.

Case 1: The downlink data received by the terminal fails to be decoded, and the network device retransmits the downlink data.

For example, the first terminal receives the first data in the first receiving window. If the first data fails to be decoded, the first terminal may notify the network device that the first data fails to be decoded. Correspondingly, the network device may send retransmission of the first data to the first terminal. The first terminal receives the retransmission of the first data.

After the first data fails to be decoded, the first terminal may send first information in the $n^{th}$ sending window after the first receiving window, where the first information indicates that the first data fails to be decoded. Correspondingly, the network device may receive the first information in the $n^{th}$ sending window after the first receiving window. Because the first information indicates that the first data fails to be decoded, the network device may learn, based on the first information, that the first data is to-be-retransmitted data.

In an implementation, after receiving the first information, the network device may send the retransmission of the first data in a $p^{th}$ receiving window after the $n^{th}$ sending window after the first receiving window. Correspondingly, the first terminal may receive the retransmission of the first data in the $p^{th}$ receiving window after the $n^{th}$ sending window after the first receiving window.

The first receiving window and the $p^{th}$ receiving window may be two of periodically occurring receiving windows. The $n^{th}$ sending window may be one of periodically occurring sending windows.

Optionally, the first receiving window, the $n^{th}$ sending window, and the $p^{th}$ receiving window may be windows in a periodically occurring window combination. For example, the first receiving window and the $n^{th}$ sending window belong to a same window combination, and the $p^{th}$ receiving window may be a window in another window combination after a window combination to which the first receiving window and the $n^{th}$ sending window belong.

For example, as shown in FIG. 11, when the first receiving window is a receiving window RX1 in a $1^{st}$ window combination G1 in a current signal periodicity of the first signal, the first terminal may send the first information in a sending window TX1 in the window combination G1. After receiving the first information, the network device may send the retransmission of the first data in a receiving window RX2 of a next window combination G2 of the window combination G1, or may send the retransmission of the first data in a receiving window RX1 of a $1^{st}$ window combination G1 in a next signal periodicity.

In another implementation, after receiving the first information, the network device may send a first scheduling instruction to the first terminal, where the first scheduling instruction indicates a receiving window for receiving the retransmission of the first data. Then, the network device may send the retransmission of the first data in the receiving window for receiving the retransmission of the first data. Correspondingly, the first terminal receives the first scheduling instruction, and receives the retransmission of the first data in the receiving window for receiving the retransmission of the first data.

It should be noted that the network device may send the first scheduling instruction to the first terminal in a third receiving window. The third receiving window is a receiving window after the $n^{th}$ sending window after the first receiving window.

In addition, the third receiving window may be one of the plurality of receiving windows indicated by the first signal. In this case, the first terminal receives the first scheduling instruction in the third receiving window.

Optionally, the third receiving window may be a receiving window other than the plurality of receiving windows indicated by the first signal. For example, the third receiving window may be a newly triggered receiving window after the network device receives the first information. In this case, because the first terminal has not learned of a time position of the third receiving window, the first terminal may continuously monitor the downlink data of the network device after sending the first information in the $n^{th}$ sending window after the first receiving window, to receive the first scheduling instruction sent by the network device in the third receiving window.

In addition, the first scheduling instruction may include window information of the receiving window for receiving the retransmission of the first data. The window information may include start time of the receiving window for receiving the retransmission of the first data, and optionally, may further include window duration of the receiving window for receiving the retransmission of the first data. The receiving window for receiving the retransmission of the first data is a receiving window after the third receiving window.

For example, the receiving window for receiving the retransmission of the first data may be one of the plurality of receiving windows indicated by the first signal.

For example, as shown in FIG. 12, the first receiving window is a receiving window RX1 in a $1^{st}$ window combination G1 in a current signal periodicity of the first signal, and the first terminal may send the first information in a sending window TX1 in the window combination G1. After receiving the first information, the network device may trigger a new receiving window, that is, a third receiving window $RX_T$, after the sending window TX1, and send the first scheduling instruction in $RX_T$. The first scheduling instruction may indicate that a receiving window RX2 of a next window combination G2 of G1 is a receiving window for receiving the retransmission of the first data. In this way, the network device may send the retransmission of the first data in the receiving window RX2. Correspondingly, after receiving the first scheduling instruction, the first terminal may receive the retransmission of the first data in the receiving window RX2.

Optionally, the receiving window for receiving the retransmission of the first data may be a receiving window other than the plurality of receiving windows indicated by the first signal. For example, the receiving window for receiving the retransmission of the first data is a receiving window newly triggered by the network device after the third receiving window.

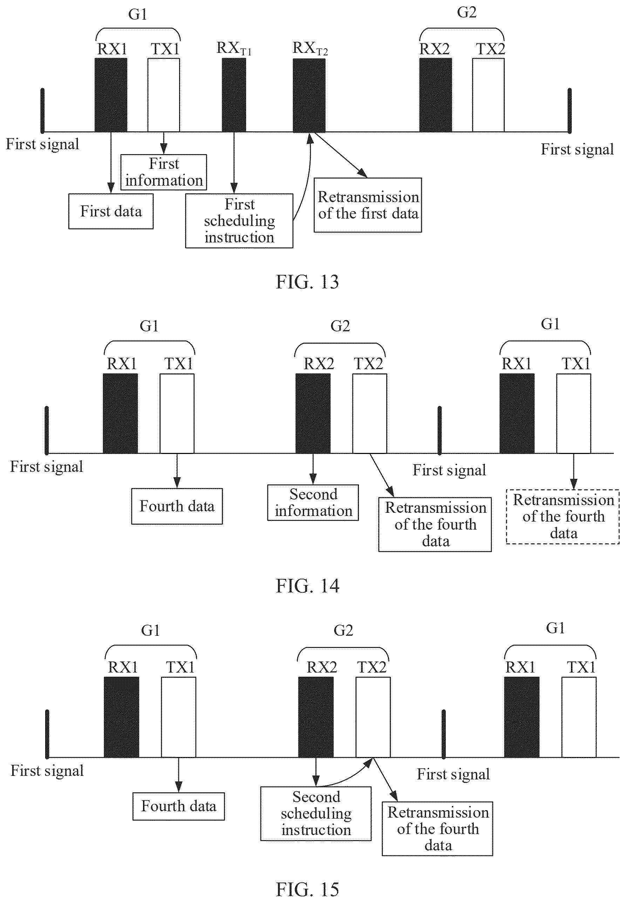

For example, as shown in FIG. 13, the first receiving window is a receiving window RX1 in a $1^{st}$ window combination G1 in a current signal periodicity of the first signal, and the first terminal may send the first information in a sending window TX1 in the window combination G1. After receiving the first information, the network device may trigger a new receiving window, that is, a third receiving window $RX_{T1}$, after the sending window TX1, and send the first scheduling instruction in

$RX_{T1}$. The first scheduling instruction may indicate that a newly triggered receiving window $RX_{T2}$ after $RX_{T1}$ is a receiving window for receiving the retransmission of the first data. In this way, the network device may send the retransmission of the first data in the receiving window $RX_{T2}$. Correspondingly, after receiving the first scheduling instruction in the receiving window $RX_{T1}$, the first terminal may receive the retransmission of the first data in the receiving window $RX_{T2}$.

Case 2: The uplink data received by the network device fails to be decoded, and the terminal retransmits the uplink data.

In an implementation, if fourth data fails to be decoded, the network device may send second information in the first receiving window, where the second information indicates that the fourth data fails to be decoded, and the fourth data is uplink data. Correspondingly, the first terminal may receive the second information in the first receiving window, and send retransmission of the fourth data in the $n^{th}$ sending window after the first receiving window. The network device receives the retransmission of the fourth data in the $n^{th}$ sending window after the first receiving window.

The fourth data is uplink data sent by the first terminal to the network device before the first receiving window. For example, the fourth data may be uplink data sent by the first terminal in a $q^{th}$ sending window before the first receiving window, q is an integer greater than 0, and q and n may be equal or unequal.

In addition, the $n^{th}$ sending window after the first receiving window may be a sending window in which there is no uplink data to be sent. In other words, when there is no uplink data to be sent in the $n^{th}$ sending window after the first receiving window, the first terminal may send the retransmission of the fourth data in the $n^{th}$ sending window after the first receiving window, where n is an integer greater than 0. For related descriptions of the $n^{th}$ sending window after the first receiving window, refer to the foregoing related descriptions. Details are not described herein again.

Optionally, if there is new uplink data to be sent in the $n^{th}$ sending window after the first receiving window, the new uplink data and the retransmission of the fourth data may be sent together, or the retransmission of the fourth data may be sent in the $n^{th}$ sending window after the first receiving window, and then the new uplink data is sent in a subsequent sending window.

For example, as shown in FIG. 14, the first terminal sends the fourth data in a sending window TX1 of a $1^{st}$ window combination G1 in a current signal periodicity, and the network device fails to decode the fourth data after receiving the fourth data in the sending window TX1. In this case, the network device may send the second information to the first terminal in a next window combination, that is, a receiving window RX2 of a $2^{nd}$ window combination G2. Correspondingly, after receiving the second information in the receiving window RX2, the first terminal may send the retransmission of the fourth data to the network device in a sending window TX2 of the window combination G2. Alternatively, the first terminal may send the retransmission of the fourth data in a sending window TX1 of a $1^{st}$ window combination G1 in a next signal periodicity.

In another implementation, if the fourth data fails to be decoded, the network device may directly send a second scheduling instruction in the first receiving window, where the second scheduling instruction indicates a sending window for sending the retransmission of the fourth data. Correspondingly, the first terminal may receive the second scheduling instruction in the first receiving window. Then, the first terminal may send the retransmission of the fourth data to the network device in the sending window that is indicated by the second scheduling instruction and that is for sending the retransmission of the fourth data.

The sending window for sending the retransmission of the fourth data may be one of the plurality of sending windows indicated by the first signal.

For example, as shown in FIG. 15, the first terminal sends the fourth data in a sending window TX1 of a $1^{st}$ window combination G1 in a current signal periodicity, and the network device fails to decode the fourth data after receiving the fourth data in the sending window TX1. In this case, the network device may send the second scheduling instruction to the first terminal in a next window combination, that is, a receiving window RX2 of a $2^{nd}$ window combination G2. The second scheduling instruction may indicate that a sending window TX2 of the window combination G2 is a sending window for sending the retransmission of the fourth data. In this way, after receiving the second scheduling instruction, the first terminal may send the retransmission of the fourth data in the sending window TX2 of the window combination G2.

Optionally, the sending window for sending the retransmission of the fourth data may alternatively be a time window other than the plurality of sending windows indicated by the first signal. Alternatively, the sending window for sending the retransmission of the fourth data may be a sending window newly triggered by the network device.

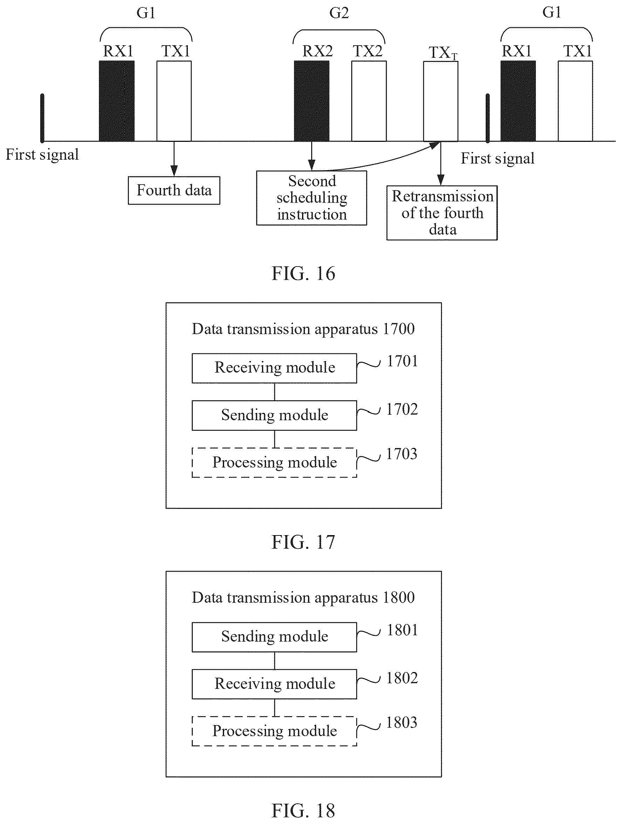

For example, as shown in FIG. 16, the first terminal sends the fourth data in a sending window TX1 of a $1^{st}$ window combination G1 in a current signal periodicity, and the network device fails to decode the fourth data after receiving the fourth data in the sending window TX1. In this case, the network device may send the second scheduling instruction to the first terminal in a next window combination, that is, a receiving window RX2 of a $2^{nd}$ window combination G2. The second scheduling instruction may indicate that a newly triggered sending window $TX_T$ after the receiving window RX2 is a sending window for sending the retransmission of the fourth data. In this way, after receiving the second scheduling instruction, the first terminal may send the retransmission of the fourth data in the newly triggered sending window TX$_T$.

Optionally, in this embodiment of this application, when sending the second scheduling instruction in the first receiving window, the network device may further send the second information in the first receiving window. The first terminal receives the second information and the second scheduling instruction in the first receiving window. The first terminal learns, based on the second information, that the fourth data fails to be decoded, and then sends the retransmission of the fourth data based on the sending window that is indicated by the second scheduling instruction and that is for sending the retransmission of the fourth data.

In this embodiment of this application, after failing to decode the data, the network device or the terminal may retransmit data based on a window indicated by the first signal or a newly triggered window, to ensure reliability of data transmission.

The foregoing embodiment mainly describes an implementation process in which the terminal and the network device transmit data based on the window indicated by the first signal, and perform data retransmission based on the window indicated by the first signal. It can be learned from the descriptions in step 401 that the network device may carry the window configuration parameter in the first signal to indicate the plurality of sending windows. In this way, some window configuration parameters may also be preconfigured in both the network device and the terminal. Based on this, in this embodiment of this application, when the terminal or the network device determines that a window configured based on the window configuration parameter cannot meet a data transmission requirement, the terminal or the network device may further transmit, by using the window indicated by the first signal, a target parameter used to update the window configuration parameter, to update the window indicated by the first signal. For example, updating the window configuration parameter may include the following two cases.

Case 1: The terminal requests to update the window configuration parameter.

When the first terminal needs to update the window configuration parameter, the first terminal may send a window update request in a first sending window, where the window update request includes a target parameter, and requests to update the window configuration parameter based on the target parameter. Correspondingly, the network device may receive the window update request in the first sending window.

The first sending window may be any one of the plurality of sending windows indicated by the first signal. For example, after determining that the window configuration parameter needs to be updated, the first terminal may send the window update request in a specific sending window in which there is no uplink data to be sent, or send uplink data in a specific sending window while sending the window update request in the sending window.

In addition, in this embodiment of this application, the target parameter may be a terminal-level update parameter. The terminal-level update parameter is an update parameter for a specific terminal. For example, the target parameter may be an update parameter for the first terminal. In other words, the first terminal may update the window configuration parameter based on the target parameter, but another terminal does not update the window configuration parameter based on the target parameter. In this case, the window update request may further include the terminal information of the first terminal corresponding to the target parameter, to indicate that the target parameter is an update parameter for the first terminal.

Optionally, the target parameter may alternatively be a common update parameter. The common update parameter is an update parameter for a plurality of terminals, for example, an update parameter for a terminal within coverage of one or more cells provided by the network device. In other words, all terminals within the coverage of the one or more cells provided by the network device may update the window configuration parameter based on the target parameter.

Optionally, the window update request may include a plurality of target parameters. In this case, the plurality of target parameters may include a terminal-level update parameter and/or a common update parameter.

In addition, the target parameter may be target window duration, a quantity of target windows, a target repetition periodicity, or the like. The quantity of target windows may include at least one of a quantity of sending windows, a quantity of receiving windows, and a quantity of window combinations, and the target repetition periodicity may include a repetition periodicity of a sending window and/or a repetition periodicity of a receiving window.

After sending the window update request in the first sending window, the first terminal may update, to the target parameter based on the target parameter, a parameter corresponding to a target parameter in a currently stored window configuration parameter. Correspondingly, after the network device receives the window update request, if the target parameter is a terminal-level update parameter, the network device may update, to the target parameter, the parameter corresponding to the target parameter in the currently stored window configuration parameter of the first terminal. If the target parameter is a common update parameter, the network device may update, to the target parameter, a parameter corresponding to a target parameter in currently stored window configuration parameters of terminals.

Optionally, in a possible implementation, after receiving the window update request in the first sending window, the network device may further send fourth information to the first terminal, where the fourth information is used to respond to the window update request. If the network device agrees to update the window configuration parameter based on the target parameter, the network device may update the window configuration parameter based on the target parameter. In this case, the fourth information may include acknowledgment information of the target parameter. Optionally, if the network device refuses to update the window configuration parameter based on the target parameter, the network device does not perform an operation of updating the window configuration parameter based on the target parameter. In this case, the fourth information includes rejection information of the target parameter. Optionally, when there are the plurality of target parameters, the network device may agree to update the window configuration parameter based on a part of the target parameters, and refuse to update the window configuration parameter based on the other part of the target parameters. In this case, the fourth information may include acknowledgment information of a part of the target parameters and rejection information of the other part of the target parameters.

After receiving the fourth information, if the fourth information includes the acknowledgment information of the target parameter, the first terminal determines that the network device agrees to update the window configuration parameter based on the target parameter. In this case, the first terminal updates the window configuration parameter based on the target parameter. If the fourth information includes the rejection information of the target parameter, the network device indicates to reject to update the window configuration parameter based on the target parameter. In this case, the first terminal does not perform an operation of updating the window configuration parameter based on the target parameter.

Optionally, if the network device agrees to update the window configuration parameter based on the target parameter, the network device may update the window configuration parameter based on the target parameter, and send the fourth information to the first terminal in the first sending window, where the fourth information indicates to update the window configuration parameter based on the target parameter. If the network device refuses to update the window configuration parameter based on the target parameter, the network device may not respond to the window update request. Based on this, when receiving the fourth information, the first terminal may update the window configuration parameter based on the target parameter. If the first terminal does not receive the fourth information, the first terminal does not perform an operation of updating the window configuration parameter based on the target parameter.

Optionally, when the fourth information includes the acknowledgment information of the target parameter or the fourth information indicates to update the window configuration parameter based on the target parameter, the fourth information may further include an effective moment of the target parameter indicated by the network device or indication information used to determine an effective moment of the target parameter. For example, the indication information used to determine the effective moment of the target parameter may be a time period, to indicate that the target parameter take effects after the time period since the terminal receives the fourth information.

Optionally, after the window configuration parameter is updated based on the target parameter, if the target parameter is a terminal-level update parameter, an effective moment of the target parameter in the first terminal may be a sending moment of the window update request, and an effective moment of the target parameter in the network device may be a receiving moment of the window update request. Alternatively, the effective moment of the target parameter in the first terminal is a receiving moment of the fourth information or a moment at which updating of the window configuration parameter based on the target parameter is completed, and the effective moment of the target parameter in the network device is a sending moment of the fourth information or a moment at which updating of the window configuration parameter based on the target parameter is completed. Alternatively, when the fourth information further includes the effective moment of the target parameter or the indication information used to determine the effective moment of the target parameter, the effective moments of the target parameter in the first terminal and the network device is the effective moment of the target parameter indicated by the network device.

Optionally, if the target parameter is a common update parameter, the effective moments of the target parameter in the first terminal and the network device may be an effective moment of the target parameter indicated by the network device in the fourth information, or a start moment of a signal periodicity of a next first signal.

**Case 2:** The network device actively updates the window configuration parameter.

When the network device needs to update the window configuration parameter, the network device may send a window update indication in a second receiving window, where the window update indication includes the target parameter, and the window update indication indicates to update the window configuration parameter based on the target parameter. The first terminal may receive the window update indication in the second receiving window.

The second receiving window may be any one of the plurality of receiving windows indicated by the first signal.

It should be noted that, it can be learned from the foregoing descriptions that the target parameter may be a terminal-level update parameter, or may be a common update parameter. When the target parameter is a terminal-level update parameter, the window update indication further includes terminal information corresponding to the target parameter. Based on this, after receiving the window update indication in the second receiving window, the first terminal may detect whether the terminal information corresponding to the target parameter in the window update indication is the terminal information of the first terminal. If the terminal information corresponding to the target parameter is the terminal information of the first terminal, it indicates that the target parameter is an update parameter for the first terminal, and the first terminal may update the window configuration parameter based on the target parameter. If the terminal information corresponding to the target parameter is not the terminal information of the first terminal, it indicates that the target parameter is not an update parameter for the first terminal. In this case, the first terminal does not perform an operation of updating the window configuration parameter based on the target parameter.

When the target parameter is a common update parameter, after receiving the window update indication in the second receiving window, the first terminal updates, based on the target parameter, a window configuration parameter stored in the first terminal. For an implementation of updating the window configuration parameter based on the target parameter, refer to the foregoing descriptions. Details are not described herein again.

Optionally, the window update indication may further include an effective moment of the target parameter indicated by the network device.

Optionally, if the target parameter is a terminal-level update parameter, an effective moment of the target parameter in the first terminal may be a receiving moment of the window update indication, and the effective moment of the target parameter in the network device may be a sending moment of the window update indication. Alternatively, both the effective moments of the target parameter in the first terminal and in the network device are an effective moment of the target parameter indicated by the network device in the window update indication.

Optionally, when the target parameter is a terminal-level update parameter, the network device may not send the window update indication in the second receiving window, but carry the target parameter in a next first signal. In this way, after receiving the target parameter, the first terminal immediately updates the window configuration parameter based on the target parameter, and the target parameter immediately takes effect after the update is completed.

If the target parameter is a common update parameter, the effective moments of the target parameter in the first terminal and the network device may be an effective moment of the target parameter indicated by the network device in the window update indication, or a start moment of a signal periodicity of a next first signal.

Optionally, when the target parameter is a common update parameter, the network device may not send the window update indication in the second receiving window, but carry the target parameter in the next first signal. In this way, after receiving the target parameter, each terminal including the first terminal immediately updates the window configuration parameter based on the target parameter, and the target parameter immediately takes effect after the update is completed.

Optionally, in some possible implementations, the target parameter may be a target mode identifier, and the target mode identifier is an identifier of a to-be-updated window configuration mode. In this case, the first terminal and the network device may update the window configuration mode based on the target mode identifier, to update a window based on a window configuration parameter corresponding to an updated window configuration mode.

In this embodiment of this application, the network device or the terminal may flexibly update the window configuration parameter, so that a configured window can better match a service requirement, a network scheduling requirement, and an energy saving requirement.

The following describes a data transmission apparatus provided in embodiments of this application.

FIG. 17 is a diagram of a structure of a data transmission apparatus 1700 according to an embodiment of this application. The apparatus may be deployed in the terminal in the foregoing embodiment. As shown in FIG. 17, the data transmission apparatus includes a receiving module 1701 and a sending module 1702.

The receiving module 1701 is configured to perform the step performed by the terminal in step 401 in the foregoing embodiment. The sending module 1702 is configured to perform the step performed by the terminal in step 402 in the foregoing embodiment.

Optionally, the apparatus 1700 further includes a processing module 1703, and the processing module 1703 is configured to: determine a repetition periodicity of the sending window based on the first signal; or determine, based on the first signal, a time position of the sending window relative to the first signal.

Optionally, the first signal carries a window configuration parameter, and the window configuration parameter includes the repetition periodicity of the sending window.

Optionally, the first signal is a periodically sent signal, the first signal carries a window configuration parameter, and the window configuration parameter includes a signal periodicity of the first signal and a quantity of sending windows in the signal periodicity. The processing module 1703 is specifically configured to: determine the time position of the sending window relative to the first signal based on the signal periodicity of the first signal and the quantity of sending windows in the signal periodicity.

Optionally, the receiving module 1701 is further configured to: receive first data in a first receiving window. The sending module 1702 is specifically configured to: send feedback data of the first data in an $n^{th}$ sending window after the first receiving window, where n is an integer greater than 0.

Optionally, the sending module 1702 is specifically configured to: if there is second data to be sent, send the second data in the $n^{th}$ sending window after the first receiving window.

Optionally, the sending module 1702 is specifically configured to: if there is second data to be sent, send the second data in a $k^{th}$ sending window after the first receiving window, where k is not equal to n.

Optionally, the receiving module 1701 is further configured to: receive feedback data of the second data in an $m^{th}$ receiving window after the $k^{th}$ sending window after the first receiving window.

Optionally, the sending module 1702 is further configured to: if sending duration of the second data is greater than window duration of the $k^{th}$ sending window after the first receiving window, send a window duration adjustment request in the $n^{th}$ sending window after the first receiving window, where the window duration adjustment request is used to request to adjust the window duration of the $k^{th}$ sending window after the first receiving window, and k is greater than n; and send, based on adjusted window duration, the second data in the $k^{th}$ sending window after the first receiving window.

Optionally, the sending module 1702 is specifically configured to: if third data sent by the network device to another terminal is detected in the first receiving window, and there is second data to be sent, send the second data in the $m^{th}$ sending window after the first receiving window, where m is an integer greater than 1.

Optionally, the sending module 1702 is specifically configured to: if third data sent by the network device to another terminal is detected in the first receiving window, and there is second data to be sent, send the second data in a second time period after a first time period in the $n^{th}$ sending window after the first receiving window.

Optionally, the receiving module 1701 is further configured to: receive the first data in the first receiving window. The sending module 1702 is specifically configured to: if the first data fails to be decoded, send first information in the $n^{th}$ sending window after the first receiving window, where the first information indicates that the first data fails to be decoded.

Optionally, the receiving module 1701 is further configured to: receive retransmission of the first data in a $p^{th}$ receiving window after the $n^{th}$ sending window after the first receiving window.

Optionally, the receiving module 1701 is further configured to: receive a first scheduling instruction, where the first scheduling instruction indicates a receiving window for receiving the retransmission of the first data. Optionally, the receiving module 1701 is further configured to: receive the retransmission of the first data in the receiving window for receiving the retransmission of the first data.

Optionally, the receiving window for receiving the retransmission of the first data is a receiving window indicated by the first signal or a time window other than the receiving window indicated by the first signal.

Optionally, the receiving module 1701 is further configured to: receive second information in the first receiving window, where the second information indicates that fourth data fails to be decoded, and the fourth data is uplink data. The sending module 1702 is specifically configured to: send retransmission of the fourth data in the $n^{th}$ sending window after the first receiving window.

Optionally, the receiving module 1701 is further configured to: receive a second scheduling instruction in the first receiving window, where the second scheduling instruction indicates a sending window for sending the retransmission of the fourth data, and the sending window for sending the retransmission of the fourth data is one of the plurality of sending windows indicated by the first signal, or the sending window for sending the retransmission of the fourth data is a time window other than the plurality of sending windows indicated by the first signal.

Optionally, the sending module 1702 is specifically configured to: send a window update request in a first sending window, where the window update request includes a target parameter, and the window update request is used to request to update the window configuration parameter based on the target parameter.

Optionally, the receiving module 1701 is further configured to: receive fourth information, where the fourth information is used to respond to the window update request.

Optionally, the receiving module 1701 is further configured to: receive a window update indication in a second receiving window, where the window update indication includes the target parameter, and the window update indication indicates to update the window configuration parameter based on the target parameter.

Optionally, an effective moment of the target parameter is a sending moment of the window update request, a receiving moment of the fourth information, or a receiving moment of the window update indication; or when the target parameter is an update parameter for a plurality of terminals, the effective moment of the target parameter is a start moment of a signal periodicity of a next first signal.

In this embodiment of this application, the terminal may send uplink data to the network device based on the sending window indicated by the first signal. Correspondingly, the network device only needs to monitor, in the sending window, the uplink data sent by the terminal, and does not need to perform real-time monitoring, to reduce power consumption of the network device.

FIG. 18 is a diagram of a structure of another data transmission apparatus 1800 according to an embodiment of this application. The apparatus 1800 may be deployed in the network device in the foregoing embodiment. As shown in FIG. 18, the apparatus 1800 includes a sending module 1801 and a receiving module 1802.

The sending module 1801 is configured to perform the step performed by the network device in step 401 in the foregoing embodiment. The receiving module 1802 is configured to perform the step performed by the network device in step 402 in the foregoing embodiment.

Optionally, the apparatus 1800 further includes a processing module 1803, and the processing module 1803 is configured to: indicate a repetition periodicity of the sending window by using the first signal; or indicate, by using the first signal, a time position of the sending window relative to the first signal.

Optionally, the first signal carries a window configuration parameter, and the window configuration parameter includes the repetition periodicity of the sending window.

Optionally, the first signal is a periodically sent signal, the first signal carries a window configuration parameter, and the window configuration parameter includes a signal periodicity of the first signal and a quantity of sending windows in the signal periodicity. The processing module 1803 is specifically configured to: indicate the time position of the sending window relative to the first signal by using the signal periodicity of the first signal and the quantity of sending windows in the signal periodicity.

Optionally, the sending module 1801 is further configured to: send first data in a first receiving window. The receiving module 1802 is specifically configured to: receive feedback data of the first data in an $n^{th}$ sending window after the first receiving window, where n is an integer greater than 0.

Optionally, the receiving module 1802 is specifically configured to: receive second data in the $n^{th}$ sending window after the first receiving window.

Optionally, the receiving module 1802 is specifically configured to: receive second data in a $k^{th}$ sending window after the first receiving window, where k is not equal to n.

Optionally, the sending module 1801 is further configured to: send feedback data of the second data in an $m^{th}$ receiving window after the $k^{th}$ sending window after the first receiving window.

Optionally, the receiving module 1802 is further configured to: receive a window duration adjustment request in the $n^{th}$ sending window after the first receiving window, where the window duration adjustment request is used to request to adjust window duration of the $k^{th}$ sending window after the first receiving window, and k is greater than n; and receive, based on adjusted window duration, the second data in the $k^{th}$ sending window after the first receiving window.

Optionally, the sending module 1801 is further configured to: send the first data in the first receiving window. The receiving module 1802 is specifically configured to: receive first information in the $n^{th}$ sending window after the first receiving window, where the first information indicates that the first data fails to be decoded.

Optionally, the sending module 1801 is further configured to: send retransmission of the first data in a $p^{th}$ receiving window after the $n^{th}$ sending window after the first receiving window.

Optionally, the sending module 1801 is further configured to: send a first scheduling instruction, where the first scheduling instruction indicates a receiving window for receiving the retransmission of the first data. Optionally, the sending module 1801 is further configured to: send the retransmission of the first data in the receiving window for receiving the retransmission of the first data.

Optionally, the receiving window for receiving the retransmission of the first data is a receiving window indicated by the first signal or a time window other than the receiving window indicated by the first signal.

Optionally, the sending module 1801 is further configured to: if fourth data fails to be decoded, send second information in the first receiving window, where the second information indicates that the fourth data fails to be decoded, and the fourth data is uplink data. The receiving module 1802 is specifically configured to: receive retransmission of the fourth data in the $n^{th}$ sending window after the first receiving window.

Optionally, the sending module 1801 is further configured to: if the fourth data fails to be decoded, send a second scheduling instruction in the first receiving window, where the second scheduling instruction indicates a sending window for sending the retransmission of the fourth data, and the sending window for sending the retransmission of the fourth data is one of the plurality of sending windows indicated by the first signal, or the sending window for sending the retransmission of the fourth data is a time window other than the plurality of sending windows indicated by the first signal.

Optionally, the receiving module 1802 is specifically configured to: receive a window update request in a first sending window, where the window update request includes a target parameter, and the window update request is used to request to update the window configuration parameter based on the target parameter.

Optionally, the sending module 1801 is further configured to: send fourth information, where the fourth information is used to respond to the window update request.

Optionally, the sending module 1801 is further configured to: send a window update indication in a second receiving window, where the window update indication includes the target parameter, and the window update indication indicates to update the window configuration parameter based on the target parameter.

Optionally, an effective moment of the target parameter is a receiving moment of the window update request, a sending moment of the fourth information, or a sending moment of the window update indication; or when the target parameter is an update parameter for a plurality of terminals, the effective moment of the target parameter is a start moment of a signal periodicity of a next first signal.

In this embodiment of this application, the network device may send the first signal to the terminal, to indicate the plurality of sending windows. Based on this, the terminal may send uplink data to the network device based on the sending window. In this way, the network device only needs to monitor, in the sending window, the uplink data sent by the terminal, and does not need to perform real-time monitoring, to reduce power consumption of the network device.

It should be noted that module division in various data transmission apparatuses in the foregoing embodiments is an example, and is merely logical function division. During actual implementation, there may be another division manner. In addition, functional modules in embodiments of this application may be integrated into one processor, each of the modules may exist alone physically, or two or more modules may be integrated into one module. The integrated module may be implemented in a form of hardware, or may be implemented in a form of a software functional module.

If the integrated module is implemented in a form of a software functional module and is sold or used as an independent product, the integrated module may be stored in a computer-readable storage medium. Based on such an understanding, the technical solutions of embodiments of this application essentially, or the part contributing to the conventional technology, or all or a part of the technical solutions may be implemented in a form of a software product. The computer software product is stored in a storage medium and includes several instructions for instructing a network device (which may be a router or a switch) or a processor (processor) to perform all or some of the steps of the method described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

In addition, the data transmission apparatus provided in the foregoing embodiment and the data transmission method embodiment belong to a same concept. For a specific implementation process of the apparatus, refer to the method embodiment. Details are not described herein again.

All or some of the foregoing embodiments may be implemented by software, hardware, firmware, or any combination thereof. When software is used to implement embodiments, all or some of the embodiments may be implemented in a form of a computer program product. The computer program product includes one or more computer instructions. When the computer instructions are loaded and executed on a computer, the procedures or functions according to embodiments of this application are all or partially generated. The computer may be a general-purpose computer, a special-computer, a computer network, or another programmable apparatuses. The computer instructions may be stored in a computer-readable storage medium, or may be transmitted from a computer-readable storage medium to another computer-readable storage medium. For example, the computer instructions may be transmitted from a website, a computer, a server or a data center to another website, computer, server or data center in a wired (for example, a coaxial cable, an optical fiber, a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a tape), an optical medium (for example, a digital versatile disc (digital versatile disc, DVD)), or a semi-conductive medium (for example, a solid-state disk (solid-state disk, SSD)).

In embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof. In embodiments of this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. In text descriptions of this application, the character "/" generally represents an "or" relationship between associated objects. In this application, "first", "second", and various numbers are used for differentiation for ease of description, and are not used to limit the scope of embodiments of this application, for example, are intended to distinguish between different messages but not to describe a specific order or sequence.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

In conclusion, the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A data transmission method, wherein the method comprises:

receiving a first signal, wherein the first signal indicates a plurality of sending windows; and sending uplink data based on the sending window.

2. The method according to claim 1, wherein the method further comprises:

determining a repetition periodicity of the sending window based on the first signal; or determining, based on the first signal, a time position of the sending window relative to the first signal.

3. The method according to claim 2, wherein the first signal carries a window configuration parameter, and the window configuration parameter comprises the repetition periodicity of the sending window.

4. The method according to claim 2, wherein the first signal is a periodically sent signal, the first signal carries a window configuration parameter, and the window configuration parameter comprises a signal periodicity of the first signal and a quantity of sending windows in the signal periodicity; and determining, based on the first signal, the time position of the sending window relative to the first signal comprises: determining the time position of the sending window relative to the first signal based on the signal periodicity of the first signal and the quantity of sending windows in the signal periodicity.

5. The method according to any one of claims 1 to 4, wherein the method further comprises:

receiving first data in a first receiving window; and sending the uplink data based on the sending window comprises: sending feedback data of the first data in an $n^{th}$ sending window after the first receiving window, wherein n is an integer greater than 0.

6. The method according to claim 5, wherein the method further comprises: if there is second data to be sent, sending the second data in the $n^{th}$ sending window after the first receiving window.

7. The method according to claim 5, wherein the method further comprises: if there is second data to be sent, sending the second data in a $k^{th}$ sending window after the first receiving window, wherein k is not equal to n.

8. The method according to claim 7, wherein the method further comprises:

receiving feedback data of the second data in an $m^{th}$ receiving window after the $k^{th}$ sending window after the first receiving window.

9. The method according to claim 7 or 8, wherein the method further comprises:

if sending duration of the second data is greater than window duration of the $k^{th}$ sending window after the first receiving window, sending a window duration adjustment request in the $n^{th}$ sending window after the first receiving window, wherein the window duration adjustment request is used to request to adjust the window duration of the $k^{th}$ sending window after the first receiving window, and k is greater than n; and sending the second data in the $k^{th}$ sending window after the first receiving window comprises: sending, based on adjusted window duration, the second data in the $k^{th}$ sending window after the first receiving window.

10. A data transmission method, wherein the method comprises:

sending a first signal, wherein the first signal indicates a plurality of sending windows; and receiving uplink data based on the sending window.

11. The method according to claim 10, wherein the method further comprises:

indicating a repetition periodicity of the sending window by using the first signal; or indicating, by using the first signal, a time position of the sending window relative to the first signal.

12. The method according to claim 11, wherein the first signal carries a window configuration parameter, and the window configuration parameter comprises the repetition periodicity of the sending window.

13. The method according to claim 11, wherein the first signal is a periodically sent signal, the first signal carries a window configuration parameter, and the window configuration parameter comprises a signal periodicity of the first signal and a quantity of sending windows in the signal periodicity; and indicating, by using the first signal, the time position of the sending window relative to the first signal comprises: indicating the time position of the sending window relative to the first signal by using the signal periodicity of the first signal and the quantity of sending window in the signal periodicity.

**14.** The method according to any one of claims 10 to 13, wherein the method further comprises:

sending first data in a first receiving window; and receiving the uplink data based on the sending window comprises:
receiving feedback data of the first data in an $n^{th}$ sending window after the first receiving window, wherein n is an integer greater than 0.

**15.** The method according to claim 14, wherein the method further comprises:
receiving second data in the $n^{th}$ sending window after the first receiving window.

**16.** The method according to claim 14, wherein the method further comprises:
receiving second data in a $k^{th}$ sending window after the first receiving window, wherein k is not equal to n.

**17.** The method according to claim 16, wherein the method further comprises:
sending feedback data of the second data in an $m^{th}$ receiving window after the $k^{th}$ sending window after the first receiving window.

**18.** The method according to claim 16 or 17, wherein the method further comprises:

receiving a window duration adjustment request in the $n^{th}$ sending window after the first receiving window, wherein the window duration adjustment request is used to request to adjust window duration of the $k^{th}$ sending window after the first receiving window, and k is greater than n; and receiving the second data in the $k^{th}$ sending window after the first receiving window comprises:
receiving, based on adjusted window duration, the second data in the $k^{th}$ sending window after the first receiving window.

**19.** A data transmission apparatus, wherein the apparatus comprises:

a receiving module, configured to receive a first signal, wherein the first signal indicates a plurality of sending windows; and
a sending module, configured to send uplink data based on the sending window.

**20.** The apparatus according to claim 19, wherein the apparatus further comprises a processing module, and the processing module is configured to:

determine a repetition periodicity of the sending window based on the first signal; or
determine, based on the first signal, a time position of the sending window relative to the first signal.

**21.** The apparatus according to claim 20, wherein the first signal carries a window configuration parameter, and the window configuration parameter comprises the repetition periodicity of the sending window.

**22.** The apparatus according to claim 20, wherein the first signal is a periodically sent signal, the first signal carries a window configuration parameter, and the window configuration parameter comprises a signal periodicity of the first signal and a quantity of sending windows in the signal periodicity; and
the processing module is specifically configured to:
determine the time position of the sending window relative to the first signal based on the signal periodicity of the first signal and the quantity of sending windows in the signal periodicity.

**23.** The apparatus according to any one of claims 19 to 22, wherein

the receiving module is further configured to:
receive first data in a first receiving window; and the sending module is specifically configured to:
send feedback data of the first data in an $n^{th}$ sending window after the first receiving window, wherein n is an integer greater than 0.

**24.** The apparatus according to claim 23, wherein the sending module is specifically configured to:
if there is second data to be sent, send the second data in the $n^{th}$ sending window after the first receiving window.

**25.** The apparatus according to claim 23, wherein the sending module is specifically configured to:
if there is second data to be sent, send the second data in a $k^{th}$ sending window after the first receiving window, wherein k is not equal to n.

**26.** The apparatus according to claim 25, wherein the receiving module is further configured to:
receive feedback data of the second data in an $m^{th}$ receiving window after the $k^{th}$ sending window after the first receiving window.

**27.** The apparatus according to claim 25 or 26, wherein the sending module is further configured to:

if sending duration of the second data is greater than window duration of the $k^{th}$ sending window after the first receiving window, send a window duration adjustment request in the $n^{th}$ sending window after the first receiving window, wherein the window duration adjustment request is used to request to adjust the window duration of the

$k^{th}$ sending window after the first receiving window, and k is greater than n; and

send, based on adjusted window duration, the second data in the $k^{th}$ sending window after the first receiving window.

28. A data transmission apparatus, wherein the apparatus comprises:

a sending module, configured to send a first signal, wherein the first signal indicates a plurality of sending windows; and
a receiving module, configured to receive uplink data based on the sending window.

29. The apparatus according to claim 28, wherein the apparatus further comprises a processing module, and the processing module is configured to:

indicate a repetition periodicity of the sending window by using the first signal; or
indicate, by using the first signal, a time position of the sending window relative to the first signal.

30. The apparatus according to claim 29, wherein the first signal carries a window configuration parameter, and the window configuration parameter comprises the repetition periodicity of the sending window.

31. The apparatus according to claim 29, wherein the first signal is a periodically sent signal, the first signal carries a window configuration parameter, and the window configuration parameter comprises a signal periodicity of the first signal and a quantity of sending windows in the signal periodicity; and
the processing module is specifically configured to: indicate the time position of the sending window relative to the first signal by using the signal periodicity of the first signal and the quantity of sending window in the signal periodicity.

32. The apparatus according to any one of claims 28 to 31, wherein

the sending module is further configured to: send first data in a first receiving window; and
the receiving module is specifically configured to: receive feedback data of the first data in an $n^{th}$ sending window after the first receiving window, wherein n is an integer greater than 0.

33. The apparatus according to claim 32, wherein the receiving module is specifically configured to: receive second data in the $n^{th}$ sending window after the first receiving window.

34. The apparatus according to claim 32, wherein the receiving module is specifically configured to:

receive second data in a $k^{th}$ sending window after the first receiving window, wherein k is not equal to n.

35. The apparatus according to claim 34, wherein the sending module is further configured to:
send feedback data of the second data in an $m^{th}$ receiving window after the $k^{th}$ sending window after the first receiving window.

36. The apparatus according to claim 34 or 35, wherein the receiving module is further configured to:

receive a window duration adjustment request in the $n^{th}$ sending window after the first receiving window, wherein the window duration adjustment request is used to request to adjust window duration of the $k^{th}$ sending window after the first receiving window, and k is greater than n; and
receive, based on adjusted window duration, the second data in the $k^{th}$ sending window after the first receiving window.

37. A terminal, wherein the terminal comprises a processor, and the processor is configured to execute at least one program instruction or code stored in a memory, to implement the data transmission method according to any one of claims 1 to 9.

38. A network device, wherein the network device comprises a processor, and the processor is configured to execute at least one program instruction or code stored in a memory, to implement the data transmission method according to any one of claims 10 to 18.

39. A computer-readable storage medium, wherein the computer-readable storage medium stores instructions, and when the instructions are run on a computer device, the computer device is enabled to perform the data transmission method according to any one of claims 1 to 9 or claims 10 to 18.

FIG. 1

200

210 — RF circuit

260

280 — Processor

Audio circuit — Speaker 261

Microphone 262

220 — Memory

Power supply — 290

270

I/O subsystem

271 — Another input device controller

Sensor controller

Display controller — 273

272

230 — Another input device

Sensor — 250

Display — 240

Display panel — 241

Touch panel — 242

FIG. 2

301

305

Processor

CPU 0

CPU 1

Processor

CPU 0

CPU 1

303

Communication bus 302

Memory

304

306

307

Communication interface

Output device

Input device

FIG. 3

First
terminal

Network
device

401: Send a first signal, where the first signal
indicates a plurality of sending windows

402: Send uplink data based on the sending window
indicated by the first signal

FIG. 4

T1

$\Delta$t

TX1

TX2

TX3

First signal    t1          RX1                    t2          RX2        t3        First signal

T2

FIG. 5

T1

RX1    TX1

RX2    TX2

RX3    TX3

First signal          t1

First signal

G1    $\Delta$t1

$\Delta$t2

G2

G3

FIG. 6

FIG. 7

FIG. 8

FIG. 9

G1      G2      G1

RX1   TX1    RX2   TX2    RX1   TX1

First signal                            First signal

Third data

Second data

Feedback data
of the third data

FIG. 10

G1      G2      G1

RX1   TX1    RX2   TX2    RX1   TX1

First signal                     First signal

First
information

First data

Retransmission
of the first data

Retransmission
of the first data

FIG. 11

G1                              G2

RX1   TX1    $RX_T$             RX2   TX2

First signal                            First signal

First
information

First data

First
scheduling
instruction

Retransmission
of the first data

FIG. 12

FIG. 13

FIG. 14

FIG. 15

FIG. 16

FIG. 17

FIG. 18

# INTERNATIONAL SEARCH REPORT

International application No.

**PCT/CN2024/088597**

### A. CLASSIFICATION OF SUBJECT MATTER

H04W 52/02(2009.01)i

According to International Patent Classification (IPC) or to both national classification and IPC

### B. FIELDS SEARCHED

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNTXT, ENTXT, ENTXTC, CJFD, DWPI, 3GPP: 传输窗, 调度窗, 时间窗, 窗, 指示, 调度, 多, 上行, 周期, 偏移, 反馈, transmission window, schedul+ window, time window, window, indicat+, schedul+, multi+, uplink, UL, periodic, offset, feedback,

### C. DOCUMENTS CONSIDERED TO BE RELEVANT

| Category* | Citation of document, with indication, where appropriate, of the relevant passages | Relevant to claim No. |
|---|---|---|
| X | CN 114614876 A (SPREADSIGNAL SEMICONDUCTOR (NANJING) CO., LTD.) 10 June 2022 (2022-06-10) description, paragraphs [0015]-[0018] and [0069]-[0164], and figures 6-13 | 1-39 |
| X | WO 2023011426 A1 (CHINA TELECOM CORP., LTD.) 09 February 2023 (2023-02-09) description, page 4, line 10-page 6, line 33, and figures 2-11 | 1-39 |
| X | WO 2019027619 A1 (QUALCOMM INC.) 07 February 2019 (2019-02-07) description, paragraphs [0091]-[0104], and figures 3-4 | 1-39 |
| A | CN 109729586 A (NOKIA SHANGHAI BELL CO., LTD. et al.) 07 May 2019 (2019-05-07) entire document | 1-39 |
| A | US 2021212114 A1 (SONY CORP.) 08 July 2021 (2021-07-08) entire document | 1-39 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **08 July 2024** | **16 July 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/088597**

| Patent document cited in search report | | | Publication date (day/month/year) | Patent family member(s) | | | Publication date (day/month/year) |
|---|---|---|---|---|---|---|---|
| CN | 114614876 | A | 10 June 2022 | WO | 2022121680 | A1 | 16 June 2022 |
| | | | | EP | 4258777 | A1 | 11 October 2023 |
| | | | | US | 2024040527 | A1 | 01 February 2024 |
| WO | 2023011426 | A1 | 09 February 2023 | CN | 115941136 | A | 07 April 2023 |
| WO | 2019027619 | A1 | 07 February 2019 | US | 2019045437 | A1 | 07 February 2019 |
| CN | 109729586 | A | 07 May 2019 | WO | 2019085911 | A1 | 09 May 2019 |
| US | 2021212114 | A1 | 08 July 2021 | US | 2024121817 | A1 | 11 April 2024 |
| | | | | WO | 2019238009 | A1 | 19 December 2019 |

Form PCT/ISA/210 (patent family annex) (July 2022)

**EP 4 697 814 A1**

**Patent documents cited in the description**

- CN 202310517343